# EUROPEAN PATENT APPLICATION

(11) **EP 0 926 919 A2**
(43) Date of publication of application: **30.06.1999**
(21) Application number: 98309811.2
(22) Date of filing: 30.11.1998
(51) Int. Cl.: H04Q 11/04, H04L 12/56

(54) **Automatic connections manager**

(30) Priority: 24.12.1997 GB 9727163; 27.02.1998 GB 9804101
(71) Applicant: NORTHERN TELECOM LIMITED, Montreal, Quebec H2Y 3Y4 (CA)
(72) Inventor: Mann, Jason Warren, Borehamwood, Hertfordshire WD6 4TF (GB); White, Anthony Richard Phillip, Ottawa, Ontario K12 6P9 (CA); Turner, John Ian, Royston, Hertfordshire SG8 7QT (GB)
(74) Representative: Franks, Robert Benjamin

(57) **Abstract**

A system for computing connection definitions comprising a route of network elements and links and timeslots for implementing the connection on the route's links. The system may utilize existing applications for generating routes between a source and destination node in a generic network and existing applications for finding timeslots on the route. In order to use route finding and timeslot allocation applications (709,710) The system comprises management components for converting input/output data to the applications. The system presents a user with a list of possible connection definitions for connection requests, allowing the user to select which connection definition to implement. The system may be used for planning initial connections in a network or for adding connections in a network in which connections are already implemented.

## Description

### Field of the Invention

The present invention relates to communications networks comprising a plurality of nodes and links.

### Background to the Invention

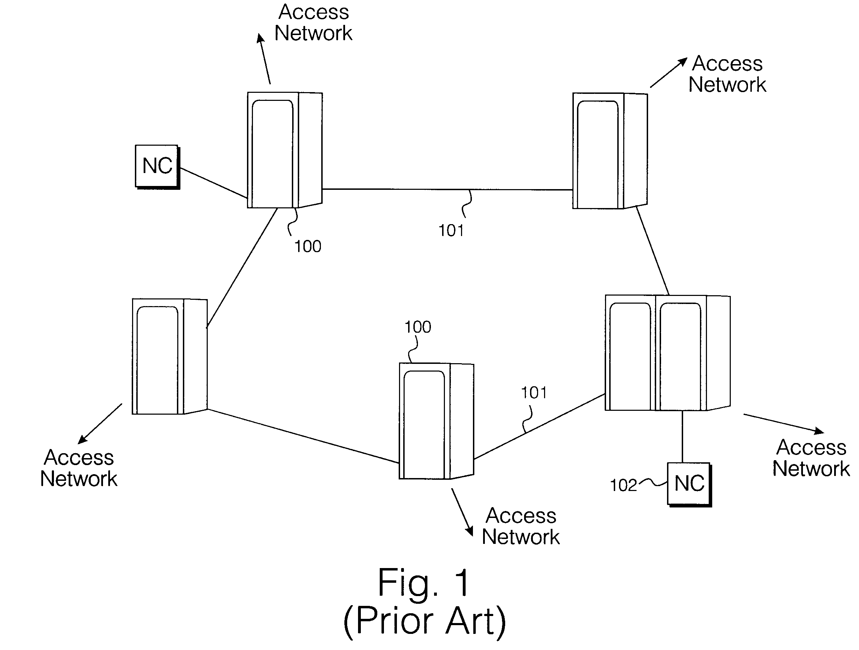

A conventional communications network, for example a broadband communications network comprises a plurality of physical resources in the form of network elements, eg switches, cross connects, regenerators, repeaters, transmission links such as fiber optic links or coaxial cable links, operating under control of a plurality logical resources, eg transport protocols, and local controls associated with individual physical resources. An example of a generic representation of a communications network is illustrated schematically in Fig. 1 herein, in which the physical resources of a core network are located at a plurality of nodes 100 and links 101 distributed over a geographical area. For a network operator to maintain control of a communications network for its operation, administration and maintenance, a management system is maintained which stores information describing the physical and logical resources within the network. One or more management systems may reside at a centralized location, eg a network controller 102, or different management systems may be situated at a plurality of network controllers at different locations. The management system stores data describing each individual network element in a communications network and has one or more management applications which use the data to manage various aspects of the network, eg operation, administration, and maintenance of the network. A conventional communications network may comprise of the order of hundreds of individual network elements, eg switches, cross connects, regenerators, each of which contains of the order of tens to hundreds of cards, having processors, line terminations, buffers, registers, switch fabrics, etc. each card containing of the order of hundreds of individual components. In general, a conventional communications network may comprise a multitude of different legacy equipment types of different proprietary manufacture, each of which has its own particular internal configuration and offers its own specific capabilities.

International Telecommunications Union (ITU-T) recommendation G.805 of November 1995, (available from International Telecommunication Union, General Secretariat, Sales Service, Place de Nation, CH 1211, Geneva 20, Switzerland), sets out a functional architecture for telecommunications transport networks in a technology independent manner. A generic functional architecture is set out as a basis for a harmonized set of functional architecture recommendations for broadband transport network including asynchronous transfer mode (ATM), synchronous digital hierarchy (SDH) and plesiochronous digital hierarchy (PDH), as well as a corresponding set of recommendations for management, performance analysis and equipment specification for such transport networks. In general, in known transport networks circuit switched communications are made on an end to end basis over a plurality of network entities. In this specification, by circuit switched, it is meant that the network reserves part of its resources for the purpose of supporting an end to end communication, for the duration of that communication, whether those resources are used or not.

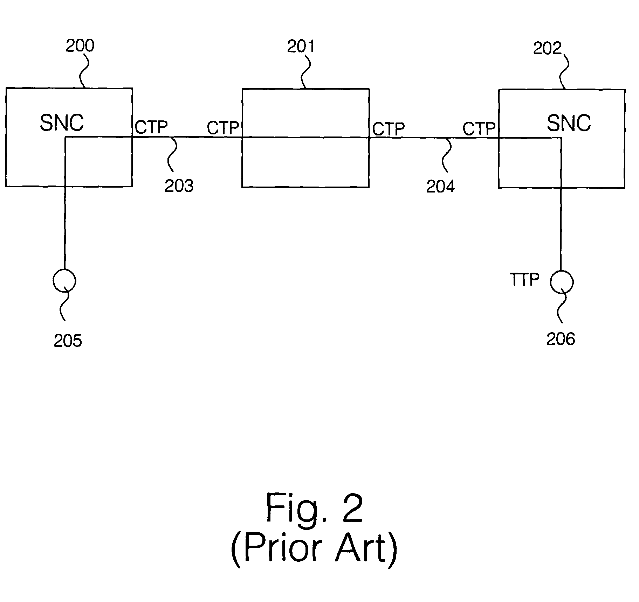

Referring to Fig. 2 herein, there is illustrated a simple example of a connection of a circuit switched communication over part of a communications transport network. A transport network is defined in recommendation G.805 as "the functional resources of the network which conveys user information between locations". In recommendation G.805, a connection is defined as "a transport entity which consists of an associated pair of uni-directional connections capable of simultaneously transferring information in opposite directions between their respective inputs and outputs". A uni-directional connection is defined as a "transport entity" responsible for the transfer of information from the input of a connection termination source to the output of a connection termination sink. The integrity of the information transfer is monitored. It is formed by combining connection termination functions and a network connection. A transport entity is defined as "an architectural component which transfers information between its inputs and outputs within a layer network. A layer network is defined as "a topological component that includes both transport entities and transport processing functions that describe the generation, transport and termination of a particular characteristic information. A connection is defined as "a transport entity which consists of an associated pair of unidirectional connections capable of simultaneously transferring information in opposite directions between their respective inputs and outputs. A uni-directional connection is defined as "a transport entity which transfers information transparently from input to output".

In Fig. 2 herein, there is illustrated schematically a plurality of transport entities 200, 201, 202, 203, 204 in a communications network comprising network elements eg switches, cross connects, links, supporting an end to end connection between first and second connection termination points 205, 206. The connection is carried over a plurality of connections, which connect the transport entities to each other. Connections between transport entities terminate at a plurality of connection termination points (CTP) within the transport entities. The generalized connection as illustrated in Fig. 2 herein, incorporates different connections in different transport protocols. For example, virtual paths and virtual circuits in asynchronous transfer mode constitute connections within the meaning of ITU-T Recommendation G.805. ATM cells may be carried within a virtual path within SDH frames over an SDH connection.

Within a layered network protocol connections occur within layers. Trails can occur at a plurality of different layers, however each connection is always contained within its own layer. In a large network, comprising tens to hundreds of network elements, management of end to end connections poses a highly complex problem and poses difficulties in the practical implementation of setting up and tearing down of connections. The concept of connection management is mentioned in recommendation G.805 in which a connection management process is defined as "configuration of network resources during network operation for the purposes of allocation, reallocation and routing of connections to provide transport to client networks." Conventionally, for creation of a connection across a network it is known for several network operators, at several network controllers controlling different sections of the network, to each set up one or more connections within sections of the network which they control. To achieve a connection over a large number of transport entities, a network operator wishing to set up a connection may need to contact, by means of a telephone call or a fax, other network operators having control of other parts of the network across which a connection may pass, and coordinate the setting up of a connection by verbal or fax communication with the other human network operators.

Manual creation of connections in networks can be a difficult problem and is prone to errors. Manual creation of connections is a difficult problem especially in multi-ring SDH topologies and in all but simple ring topologies. Two aspects of the problem of connection creation need to be solved when creating a connection between two network elements (end points). Firstly, is sufficient bandwidth available on the network link transmission elements between the two end points such that a route can be created. Secondly, can timeslots be found on the connection for implementing the connection request.

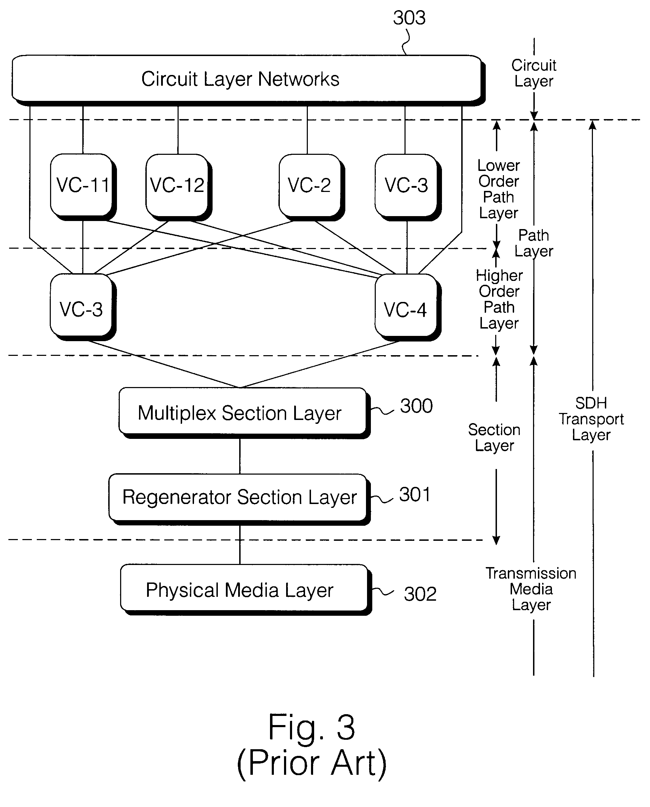

ITU-T recommendation G.803 deals with the architecture of SDH transport networks and defines an SDH based transport network layered model as illustrated in Fig. 3 herein. The G.803 model uses a functional approach to the description of architectures based on the concept of a number of SDH functional layers, and the concept of partitioning within a layer for defining administrative domains and boundaries. Physically, a conventional SDH network is constructed from a plurality of physical resources, for example network elements such as exchanges, multiplexers, regenerators, and cross connects. The network elements are connected together and provide a transmission media layer, including a section layer comprising multiplex section layer 300, and a regenerator section layer 301, and a physical media layer 302. Circuit switched traffic is routed over the physical resources in a circuit layer 303 which is carried by the SDH transport layers.

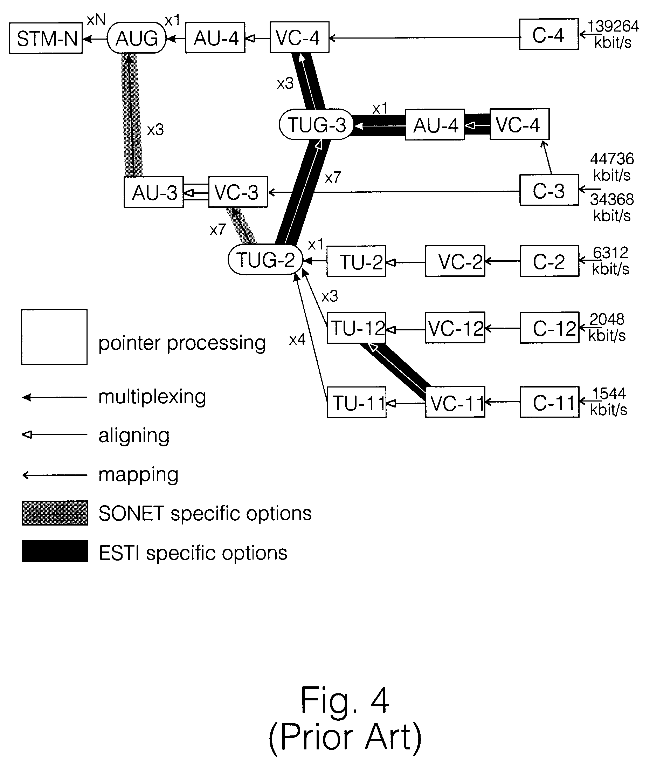

The SDH multiplexing structure is illustrated schematically in Fig. 4 herein, illustrating also synchronous optical network (SONET) multiplexing options, and European Telecommunications Standards Institute (ETSI) multiplexing options. The SDH transport layers comprise, in addition to the physical media layer and section layer, a plurality of higher order path layers, for example carried by virtual containers VC-3, VC-4, and a plurality of lower order path layers, for example carried by virtual containers VC-2, VC-3, VC-11, VC-12.

Data is carried between network elements which are geographically separated by large distances at relatively high data rates, eg 155 Mbits/s. Circuit switched connections, referred to as a circuit layer 301 in recommendation G.803 are transported across the SDH network by encapsulating bit streams comprising the circuit switched connections into different virtual containers (VCs) which are multiplexed together for transmission at higher order bit rates.

Within the physical resources, circuit switched traffic follows paths and connections at various multiplex levels. Connections are terminated at connection termination points (CTPs), and connections are terminated at connection termination points (TTPs) within physical resources. For example, within a communications network, there may be a restricted number of network elements which are capable of processing voice data. Operations on voice data at a voice level may be performed within those particular network elements. However, to transport traffic data between those network elements, there must be further transmission, such as provided by the SDH virtual container system. Thus, where a voice connection is to be made between geographically disparate network elements A and B, the connection may be routed via intermediate network elements D, E, F, G etc which may be in the VC-12 layer. However, the VC-12 layer itself, to connect between intermediate network elements E, F may need to be multiplexed into a higher bitrate layer, eg the VC-4 layer.

### Summary of the Invention

According to a first aspect of the present invention, there is provided in a communications network comprising a plurality of nodes and links, each said link comprising at least one timeslot, apparatus characterized by being capable of computing one or more connection definitions for a connection request between a source node and at least one destination node, said connection definition comprising data describing a route of said nodes and said links and timeslots to be used for links of said route, said apparatus comprising:
a route finder means for generating one or more said routes between said source node and said destination node;
a timeslot finder means for finding timeslots for use by said connection request on each link of said generated route; and
a connections manager means for interfacing between said route finder means and said timeslot finder means to compute a said connection definition.

Suitably, said connections manager means converts an output of said route finder means into an input for said timeslot finder means. The connections manager means allows selection from a set of computed connection definitions, and may allow selections of nodes to be excluded from the computed connection definitions.

The connections manager means may facilitate generation of a secondary connection definition for a selected connection request. The secondary connection definition may include nodes or links not included in the primary computed connection definition. Connection requests may specify at least one layer of a layered protocol of the network.

At each node, connections may be made between one or more ports. The connections manager enables connection definitions to be computed, which includes or excludes specific ports at specific nodes. The connections manager is configured to receive connection requests from a service application, such as may be resident on a network manager apparatus. The connections manager preferably comprises a graphical user interface, which includes means for generating a graphical network display, for use by a human network operator. Specific routing policies or policies for allocation of timeslots may be implemented in conjunction with the connections manager.

According to a second aspect of the present invention, there is provided in a communications network comprising a plurality of nodes and links, each said link comprising at least one timeslot, a method characterized by being capable of computing one or more connection definitions for a connection request between a source node and at least one destination node, said connection definition comprising data describing a route of said nodes and said links and data describing a timeslot to be used for links of said route, said method comprising the steps of:
generating one or more said routes between said source node and said destination node; and
finding a said timeslot for said connection request for links in a said generated route to compute a said connection definition.

The method may comprise selecting one of said computed connection definitions for implementation in said network. A set of nodes may be excluded from said computed connection definitions. A secondary connection definition may be generated for a selected said connection request. The secondary connection definition may include nodes or links not included in the computed connection definition.

According to a third aspect of the present invention there is provided in a communications network comprising a plurality of nodes and links, each said link comprising at least one timeslot, apparatus characterized by being capable of computing one or more connection definitions for a connection request between a source node and at least one destination node, said connection definition comprising data describing a route of said nodes and said links and timeslots to be used for links of said route, said apparatus comprising:
means for graphically displaying said communications network;
a processor for computing said connection definitions;
means for communicating with said network nodes; and
at least one data conversion manager means for communicating with at least one network application.

According to a fourth aspect of the present invention there is provided in a communications network comprising a plurality of nodes and links, each said link comprising at least one timeslot, a method characterized by being capable of computing one or more connection definitions for a connection request between a source node and at least one destination node, said connection definition comprising data describing a route of said nodes and said links and a timeslot to be used for links of said route, said method comprising the steps of:
selecting said source node for said connection request;
selecting a said destination node for said connection request;
computing at least one said connection definition for said connection request; and
selecting a said computed connection definition.

Said method may comprise the step of:
applying constraints to said connection definition to be computed for a said connection request, said constraints selected from the set:
minimum quality of service;
nodes to be included or excluded from said connection definition;
compute a secondary connection definition for said connection request;
select ports to be used on specific said nodes in said connection definition; and
use said nodes on a specific layer of said communications network in said connection definition.

According to a fifth aspect of the present invention there is provided in a communications network comprising a plurality of nodes and links, each said link comprising at least one timeslot, a method characterized by being capable of computing one or more connection definitions for a connection request between a source node and at least one destination node, said connection definition comprising data describing a route of said nodes and said links and a timeslot to be used for links of said route, said method comprising the steps of:
selecting said source node for said connection request;
selecting said destination node(s) for said connection request;
receiving data describing at least one route for said connection request in a generic network; and
using data describing said route in a generic network to compute a connection definition for said connection request in a specific type of network.

Specific implementations of the present invention may find particular application in asynchronous transfer mode (ATM) networks, but in general, the invention encompasses a variety of transport protocols, including synchronous digital hierarchy (SDH), synchronous optical network (SONET) and has general application to connection oriented communications systems.

### Brief Description of the Drawings

For a better understanding of the invention and to show how the same may be carried into effect, there will now be described by way of example only, specific embodiments, methods and processes according to the present invention with reference to the accompanying drawings in which:
Fig. 5 illustrates schematically a broadband communications network including a plurality of node network elements, a plurality of link equipment and a network controller;
Fig. 6A illustrates an example of a connection definition problem for a layer of the network shown in Fig. 5;
Fig. 6B illustrates another example of a connection definition problem for another layer of the network shown in Fig. 5;
Fig 7 illustrates schematically an architecture of the network controller identified in Fig. 5, including a channel finder component, a route finder component and an automatic connections manager component;
Fig. 8 illustrates schematically relationships between some of the components of Fig. 7 and details components of the automatic connections manager, including an ACM interface, an ACM processor, a graphical network display, a route finder manager and a timeslot finder manager;
Fig. 9 illustrates steps typically performed during interactions between the components shown in Fig. 8;
Fig. 10 illustrates a screen display used by the graphical network display component detailed in Fig. 8, which includes menus which can be used to call up further graphical network display dialogue boxes;
Fig. 11 illustrates the graphical network display's network element properties dialogue box;
Fig. 12 illustrates the graphical network display's capability editor dialogue box;
Fig. 13 illustrates the graphical network display's constraints editor dialogue box;
Fig. 14 illustrates the graphical network display's connection selection dialogue box;
Fig. 15 illustrates the graphical network display's connection definition dialogue box;
Fig. 16 illustrates schematically steps typically performed by a network operator using the Graphical Network Display to create a connection request and instruct the ACM to compute connection definitions for the connection request.
Fig. 17 is a class association diagram for data used by the route finder manager identified in Fig. 8;
Fig. 18 is a class association diagram for data associated with a path generation module of the route finder component identified in Fig. 7;
Fig. 19 is a class association diagram for data associated with a optimizer module of the route finder component identified in Fig. 7;
Fig. 20 is a class association diagram for the timeslot finder component identified in Fig. 7; and
Fig. 21 illustrates a data flow diagram showing schematically flows of data and data processing operations within the timeslot finder component identified in Fig. 7.

### Detailed Description of the Best Mode for Carrying Out the Invention

There will now be described by way of example the best mode contemplated by the inventors for carrying out the invention. In the following description numerous specific details are set forth in order to provide a thorough understanding of the present invention. It will be apparent however, to one skilled in the art, that the present invention may be practiced without using these specific details. In other instances, well known methods and structures have not been described in detail so as not to unnecessarily obscure the present invention.

In the following description, a nest mode implementation of the invention is described with reference to Synchronous Digital Hierarchy (SDH). However, it will be understood that the scope of the invention is not restricted to SDH system, but extends over any network of physical and logical resources in the telecommunications or computer networks domains, having a management information system. Networks operating Asynchronous Transfer Mode (ATM), Synchronous Optical Network (SONET), integrated service digital network (ISDN) and SDH are specific examples of such networks. However, the invention is not restricted to networks operating these specific protocols.

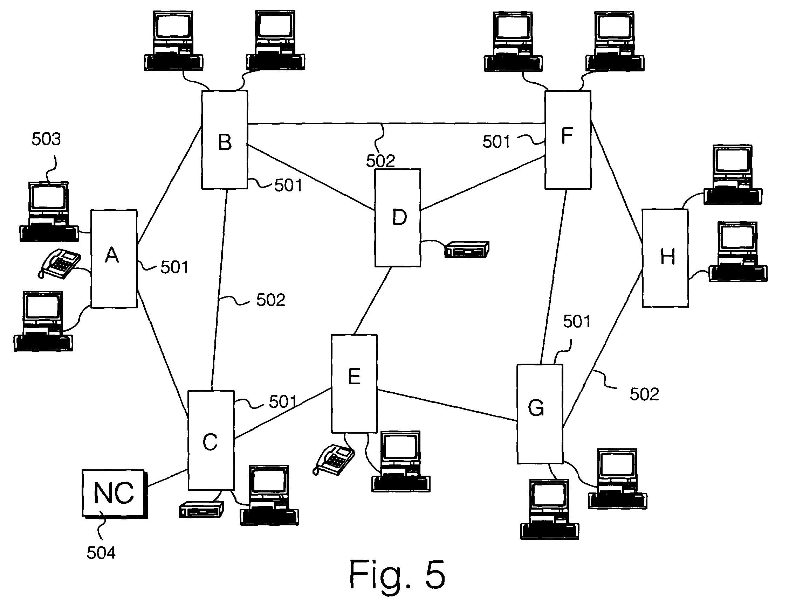

Referring to Fig. 5 herein there is shown schematically a circuit switched communications network comprising a plurality of node elements 501 each comprising an item of node equipment for example a switch, and a plurality of link elements 502, connecting the node elements, each link element 502 comprising an item of link equipment, eg terrestrial or wireless communication links. Each item of node equipment may comprise a plurality of individual physical components. Each item of link equipment may comprise one or a plurality of physical components. Each link equipment may support a plurality of communication timeslots. Each node element preferably includes one or more ports, to which an item of link equipment may be attached. The node elements may be placed in geographically distant locations.

The communications network may include mobile phone communications apparatus resident at one or more nodes of the network and a node element may comprise a gateway to another network, for example a world wide web gateway. In general, the communications network will comprise a variety of different types of node equipment and a variety of different types of link equipment, made by different manufacturers and having differing performance specifications. In Fig. 5, traffic data signals are transmitted along the link equipment and through the node equipment over a circuit switched path between a source node element and a destination node element. The traffic data may be carried between sources and destinations over a plurality of routes across the network.

In Fig. 5, the network comprises eight node elements 501, labeled A, B, C, D, E, F, G and H. Node A is connected to nodes B and C by link equipment. Node B is also connected to node C and nodes D and F. Node C is also connected to node E. Node E is connected to nodes D and G. Node F is also connected to nodes D, G, and H. Node H is also connected to node G.

A network controller 504 may be attached to a node equipment 501, the network controller comprising management functionality for managing connections or connections across the network. In the best mode herein, the network controller comprises a modular Automatic Connections Manager (ACM) component which acts as a server for finding connection definitions for connection requests generated by one or more different network management applications and/or a network operator. The ACM component may support other network management applications resident on the network controller, for example it may support network topology design for Synchronous Digital Hierarchy (SDH)/Synchronous Optical NETwork (SONET) rings, or network design and bandwidth provisioning.

The inventors have envisaged that the ACM may work in two modes: planning and on-line. Planning mode involves defining an initial set of connections in the network, ie when no connections are already implemented in the network. In planning mode, multiple connections are created simultaneously and an attempt may be made to balance use of resources network-wide. On-line mode may be when individual connections are to be implemented in the network when implemented connections already exist in the network. In on-line mode, connections may be connected one at a time and no attempt may be made to reschedule existing implemented connections even if this may result in better balanced usage of the network's resources.

A problem which the ACM attempts to solve is to compute potential connection definitions for one or more connection requests between a source network element and at least one destination network element.

As used herein, the term "connection definition" comprises data describing network resources allocated to support or to be used by a connection or a trail. More generally, a connection definition may include data describing a route of network elements and links between a source network element and at least one destination network element, including timeslots to be used on the links. Additional data defining a set of physical resources used or allocated to implement a route or connection may also be included in a connection definition, for example specific ports on network elements to be used by the connection, or cross connect operations to be performed between layers at network elements.

In this specification, a "route" is defined as a path across one or more network elements and links, between a source network element and at least one destination network element.

In this specification, the term "connection request" is used to refer to a request for an end to end connection. The term "connection" is understood from ITU-T recommendation G.805 and ITU-T recommendation 803 as described hereinbefore.

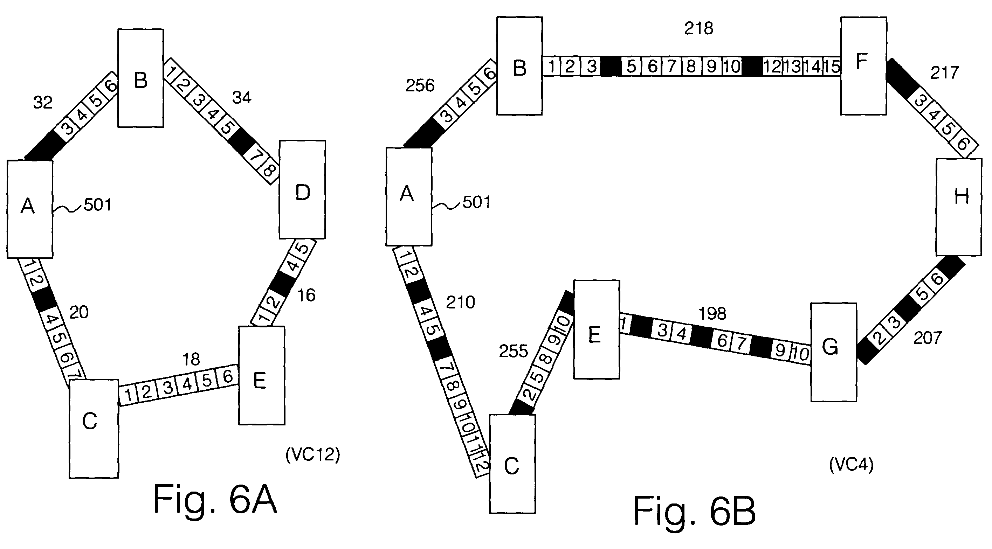

Fig. 6A of the accompanying drawings illustrates an example of a connection definition problem. In the example, network elements A, B, C, D and E of Fig. 5 are considered to have VC12 layer connectivity such that node A is connected to node B and node B is connected to node D and also node A is connected to node C, node C is connected to node E and node E is connected to node D. Links between connected nodes for the VC12 layer are shown as comprising at least one timeslot, which may be numbered consecutively for convenience. In the example shown in Fig. 6A, a timeslot which may be considered to be already in use, for example by an existing implemented connection, is shown in solid black. Each link may also have an associated cost, shown as a numerical value near a center of a link, all costs may be uniform through the network or complex costs can be attached to links, for example relating to link utilization by implemented connections. Costs may also be variable for different traffic types, for example resulting from voice or data connections.

Thus, an example of a connection request for the VC12 layer network element and links illustrated in Fig. 6A may be to provide a VC12 connection between nodes A and D and generate connection definitions such that usage of network resources is balanced and the connection definitions computed are feasible. In computing connection definitions, constraints and limitations of the network element software and hardware may be taken into account, as existing implemented connections. Various protection mechanisms may also be taken into account.

From Fig. 6A, it can be seen that two possible routes exist between nodes A and D. Possible routes between nodes A and D in Fig. 6A may traverse nodes labeled: A - B - D and the nodes A - C - E - D. In the preferred embodiment the ACM may also take into account the costs associated with each route. The cost may represent a maximum bitrate capacity which a particular piece of network equipment is capable of carrying. Therefore, the connection request preferably states a bitrate capacity requirement for the connection. Therefore if a particular link in a route is only capable of carrying a connection with a lower bitrate than that specified by the connection request, it may not be usable by a connection implementing the connection request. Other features which a connection request may specify may include:
- a traffic data type, eg voice, video, computer generated data.
- acceptable cell loss and delay thresholds.
- a time and duration when transmission of the traffic data is required.
- a number of routes and a splitting of traffic data between those routes.
- network elements and/or links to be included or excluded from a connection definition computed for the connection request.
- whether a secondary connection definition is also to be computed, ie a secondary connection definition is to be computed in addition to a primary connection definition which the ACM attempts to compute for connection requests. Secondary connection definition may be useful for when a "protection path" is required for a connection, ie an auxiliary connection definition to be used if a fault occurs in network element in the primary connection definition. A request for a secondary connection definition may specify whether a diverse path is required in the secondary connection definition, ie different network elements and/or links should be used in the primary and secondary connection definitions.

As can be seen from Fig. 6A, a connection definition including network elements A - C - E - D may involve a longer connection (ie more network elements and links) than a connection definition A - B - D. The A - B - D connection definition also involves links having a higher bitrate capacity than the A - C - E - D connection definition (shown by the costs). Therefore a network operator who made the connection request would probably select the A - B - D connection definition computed by the ACM. The ACM would also preferably check that sufficient timeslots were available in each of the links in the connection definition, ie there were not all/too many timeslots in use already by implemented network connections.

In the preferred embodiment, the ACM computes at least one possible connection definition in response to a connection request, and the network operator who made the connection request may select one of the alternatives using the ACM. The selected connection definition may then be implemented in the network. Connection definitions which are implemented in the network, ie physical network resources specified in the definition have been allocated, may be called "connections" or "implemented connections".

Fig. 6B of the accompanying drawings illustrates another example of a possible connection definition problem, this time on a VC4 layer of the network. Two possible connection definitions may exist for a connection request between source network element A and source node H: A - B - F - H and A - C - E - G - H. However, if for example, the nodes E and G do not have the capability to cross connect channels (ie the same channel must be used from node C to node E) then there are no available timeslots, therefore the ACM would not consider connection definition A - C - E - G - H to be "feasible", and would not output nodes A - C - E - G - H as a connection definition.

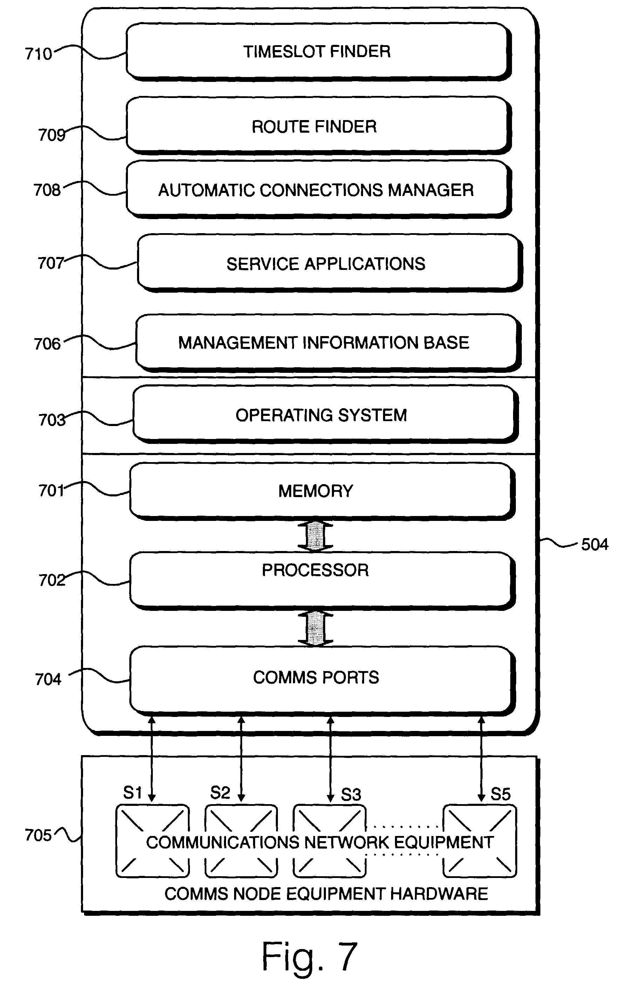

Fig. 7 of the accompanying drawings illustrates a schematic diagram of one embodiment of network controller 504. The network controller comprises a general purpose computer, such as a Hewlett Packard 9000 series work station, comprising a memory 701; a processor 702; an operating system 703; a plurality of communications ports 704 through which data is transferred to and from communications node equipment hardware 705; a management information base (MIB) 706 holding data describing physical resources of a network, eg node equipment type, link bitrate capacity; an automatic connections manager component 708; a route finder component 709; a timeslot finder component 710 and a plurality of network management applications 707 for managing services over the network.

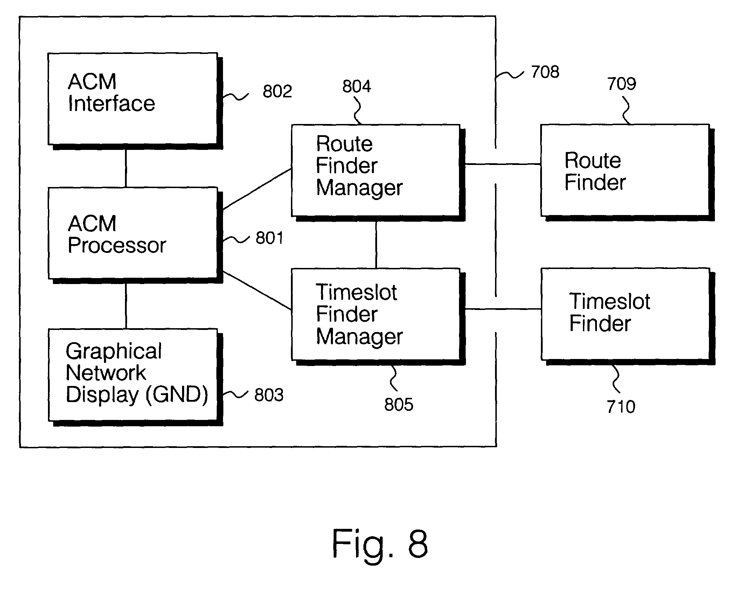

Fig. 8 of the accompanying drawings illustrates schematically relationships between the route finder component 709, the timeslot finder component 710, and components contained within automatic connections manager 708. The architecture of ACM component 708 is preferably intended to maximize use of existing software components, which may include route finder 709 and timeslot finder 710, acting as an interface between the route finder and the timeslot finder and the network operators and/or service applications.

ACM 708 comprises an ACM processor component 801. The ACM processor 801 may be considered to be a central component of the ACM and can communicate with all other components of ACM 708. The ACM processor 801 stores a model of the network which includes data describing topology at all layers of the network and capabilities of individual network elements in the network. The ACM processor 801 may also store connection requests and data describing connections implemented in the network.

ACM 708 also comprises an ACM interface component 802. The ACM interface 802 may manage interaction between the ACM 708 and the network. For example, the ACM interface 802 may acquire data describing the network, possibly from MIB 706, and transfer it to ACM processor 801 for creation of the ACM's network model. The ACM interface may also monitor events in the network indicating configuration changes, for example addition of links or network elements, failures of network elements.

ACM 708 also comprises a Graphical Network Display (GND) component 803. GND 803 may allow a network operator to interact with ACM 708 by means of a graphical user interface. Examples of such interactions include the network operator making connection requests and asking the ACM to find one or more connection definitions for each request and editing or entering data describing the network.

ACM 708 may also include a route finder manager component 804. The route finder manager 804 is intended to allow the ACM to interact with route finder component 709. The route finder is preferably an existing generic route finder, ie capable of finding routes of network elements and links for one or more connection request irrespective of the network hardware, possibly using a model of the network as a graph of nodes and links. In the preferred embodiment, the route finder 709 comprises a generic (ie independent of physical network equipment, using an abstract model of the network comprising data describing a graph of nodes and links/edges) route finder using genetic algorithm techniques substantially similar to the present applicant's co-pending GB patent application "Traffic Route Finder in Communications Network", application number GB 97 27163.9, filed 24 December 1997, a copy of which is filed with this specification.

The route finder manager 804 is capable of communicating with a timeslot finder manager 805, which may also communicate with ACM processor 801. The timeslot finder manager 805 allows the ACM to utilize a preferably an existing timeslot finding application, such as timeslot finder 710. The timeslot finder preferably selects one or more of the routes found by the route finder which have sufficient timeslots available to implement the connection requests. The timeslot finder may be considered to take input which refers to a generic model of the network (as used by the route finder) and output data relating to a specific type of network, eg including features such as timeslots, layers, etc which are supported by SDH networks for example.

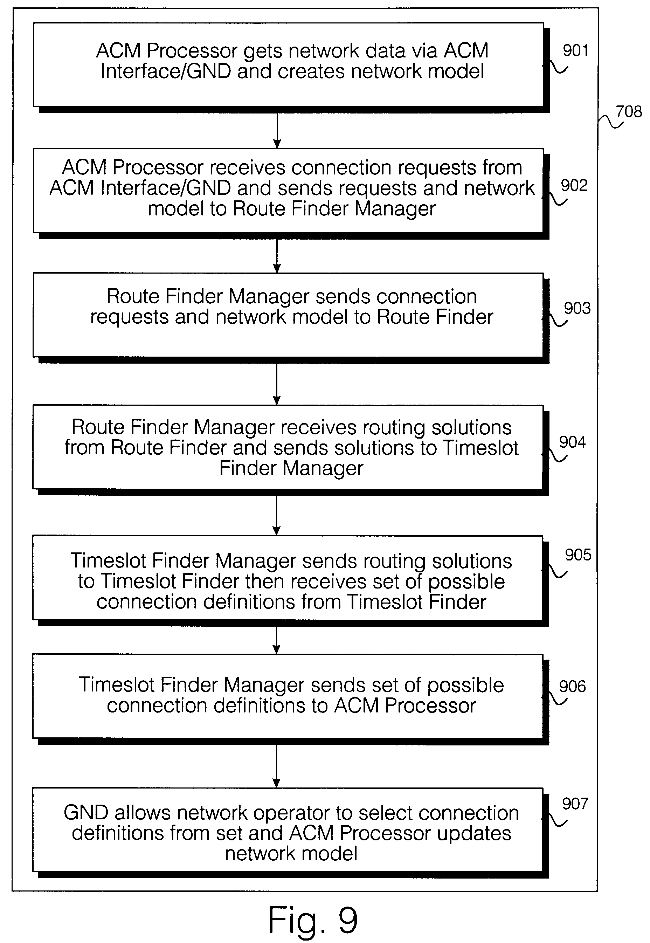

Fig. 9 of the accompanying drawings illustrates steps typically performed during interactions between the components of ACM 708, including use of route finder component 709 and timeslot finder component 710.

At step 901 ACM processor 801 creates its network model. The network model may be created using data describing the network obtained from the MIB 706 via the ACM interface 802 or using network data entered by the network operator via GND 803. The ACM processor may transfer data describing the network model to the route finder manager and/or the timeslot finder manager for transferring to the route finder or the timeslot finder. Other data included in the network model may include:
- node names, their bitrate capacities (peak or average) and their cell processing times.
- link names, their bitrate capacities (peak or average) and costs for each traffic type to be routed.
- link status data describing an amount of bitrate capacity already consumed by existing implemented connection requests.
- node status data describing an amount of bitrate capacity already consumed by existing implemented connections.
- equipment limits or capabilities, ie which layers of the network are supported by a network element, whether a network element supports features such as cross-connect, add (start) a connection, drop (terminate) a connection, allow a certain type of connection to pass through, number and features of ports on an item of network equipment.

At step 902 ACM processor 801 receives one or more connection requests. The connection requests made by network applications 606 and transferred to the ACM processor 801 by ACM interface 802. Alternatively, the connection requests may be made by the network operator using GND 803. Additional data describing connection requests may also be made by the network operator, preferably using GND 803. Such additional information may include network elements or links to be included/excluded, whether a secondary path should be computed etc. After receiving the connection requests ACM processor 801 transfers data describing the connection request and the network model to route finder manager 804.

At step 903 the route finder manager converts the connection requests and network model sent to it by ACM processor 801 into a format suitable for input into route finder component 709. Upon receiving the data from route finder manager 801, the route finder 709 preferably finds at least one route of network elements and links for each connection request in its input data and returns these routing solutions to the route finder manager.

At step 904 the route finder manager receives the routing solutions sent to it by route finder 709 and may convert them into data of a format used by the ACM processor component 801 of ACM 708. The route finder manager 804 then sends data describing the routing solutions to timeslot finder manager 805.

At step 905 the timeslot finder manager 805 sends data describing the routing solutions to timeslot finder 710. Preferably the timeslot finder 710 assigns timeslots within links on routes found for connection requests, preferably taking into account limitations of network equipment and constraints specified by the network operator as well as protection requirements for the routes. Data defining the connection request's routes and timeslots to be used on the links is transferred by timeslot finder 710 to timeslot finder manager 805.

At step 906 the timeslot finder manager 805 sends a set of one or more possible connection definitions found for each connection request to ACM processor 801. At step 907 one of the possible connection definitions for each connection request may be selected. Connection definitions may be selected by the network operator using GND 803, for example, the GND may display a list of the set of possible connections for each connection request and allow the network operator to select one using the graphical user interface. Alternatively, the ACM processor itself may select a connection definition from the set for each connection request and transfer it to the service application which made the request by means of ACM interface 802. Alternatively, the ACM processor may send the set of possible connection definitions for each connection request to service applications via ACM interface 802, allowing the respective service application which made the connection request to select one of the possible connection definitions itself. Once the connection definition for a particular connection request has been selected the network controller 504 may implement the connection in the network according to the definition. Once the connection is implemented, the ACM processor 801 may update its network model, including information describing the connection.

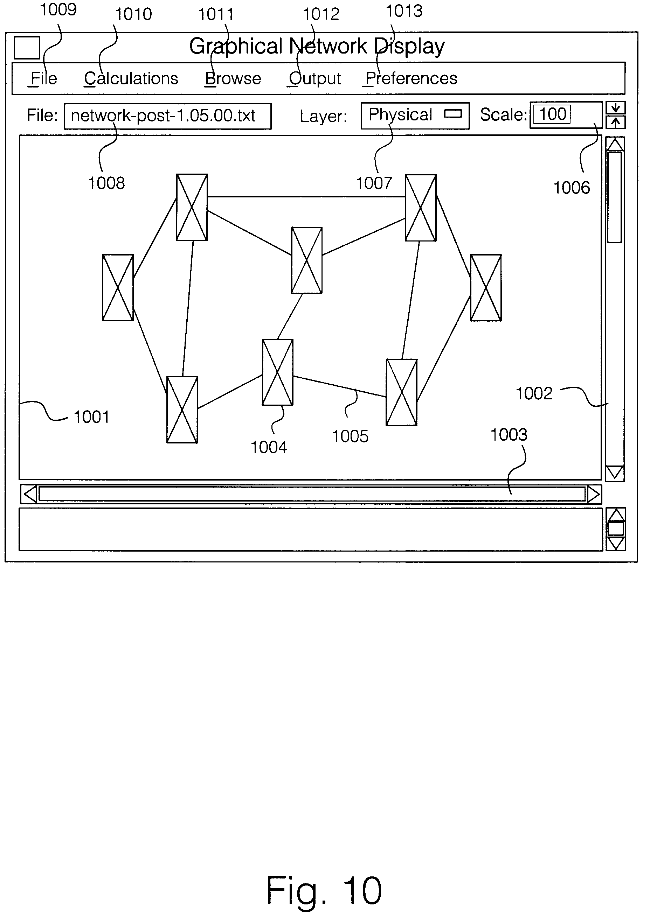

Fig. 10 of the accompanying drawings illustrates a graphical user interface generated by GND 803. The graphical user interface consists of a window having features which the network operator may select and interact with using an input device such as a mouse. The GND user interface may be used to create or edit network data which may be used by the ACM processor 801 to create its network model at step 901 as well as creating connection requests entered into the ACM at step 902.

The window consists of a main display area 1001 containing a graphical representation of the network. The network display may be scrolled to reveal areas of the network which are not visible on screen using vertical scroll bar 1002 and horizontal scroll bar 1003. The scroll bars may be configured such that holding down a shift key on a keyboard attached to the network controller 504 whilst clicking on one of the scroll bars using the mouse may accelerate the scrolling by a factor of approximately 100. The network operator may "zoom" in or out of a certain area of the display by adjusting scale factor selection box 1006. An area of the network display to be zoomed in on may be selected by holding down a control key on the keyboard which may generate a "rubber band" on the display area in order to select an area of the network displayed.

The graphical view of the network may comprise one or more network element icons 1004 representing network elements and link line icons 1005 representing network links which connect network elements. The network operator is able to select network elements or links by clicking on the appropriate icon using a left mouse button. When an icon is selected, handles may be displayed on the icon in order to indicate selection. If the network operator wishes to extend a set of selected objects, a shift key on the network controller's keyboard may be simultaneously pressed. Selection of a group of icons may be achieved by pressing the left mouse button and, keeping it pressed, drawing a rubber band around the icons to be selected. When the mouse button is released, the icons within the rubber band will be selected. De-selection of all icons can be achieved by moving the mouse to a blank area of graphical region 1001 and pressing the left mouse button. The network operator is preferably able to select various layers of the network using layer selection box 1007. Entering a name of a network layer in box 1007 may cause the GND to display only the selected layer in display region 1001. For example, entering "Physical" in box 1007 may display the physical hardware elements of the network in display region 1001, whilst entering "VC4" in box 1007 may cause only network elements and links supported on the VC4 layer of the network to be displayed in region 1001. The window may also comprise a file name selection box 1008 containing a file name representing a file to be saved onto a storage device such as a disk drive which will contain data describing the network displayed and/or connection requests and implemented connections in the network.

The window may also comprise one or more menus 1009 to 1013 which the network operator may use to edit data describing the network and/or connection requests.

File menu 1009 may comprise the following entries:
New: enter data describing a new network, erasing data describing network currently being edited by the GND.
Import: import a textual description of an existing network.
Save: save data describing network and/or connection requests and connections in an image file.
Save as: as Save, but using a new file name.
Export: save data describing the network and/or connection requests and connections as text.
Export as: as Export but using a new file name.
Delete: delete a file from the network controller's filing system.
Exit: quit the GND.

When data describing a new network is entered into the GND, for example using the New or Import entries of the file menu 1009, the GND 803 may communicate with ACM interface 802 via ACM processor 801 so that data describing the new network may be transferred to route finder manager 804 and timeslot manager 805.

Calculations menu 1010 may consist of two entries:
Compute All: causes the ACM 708 to compute connection definitions for connection requests which have not yet had connection definitions computed.
Stop calculations: causes any computation of connection definitions currently being performed by the ACM to stop.

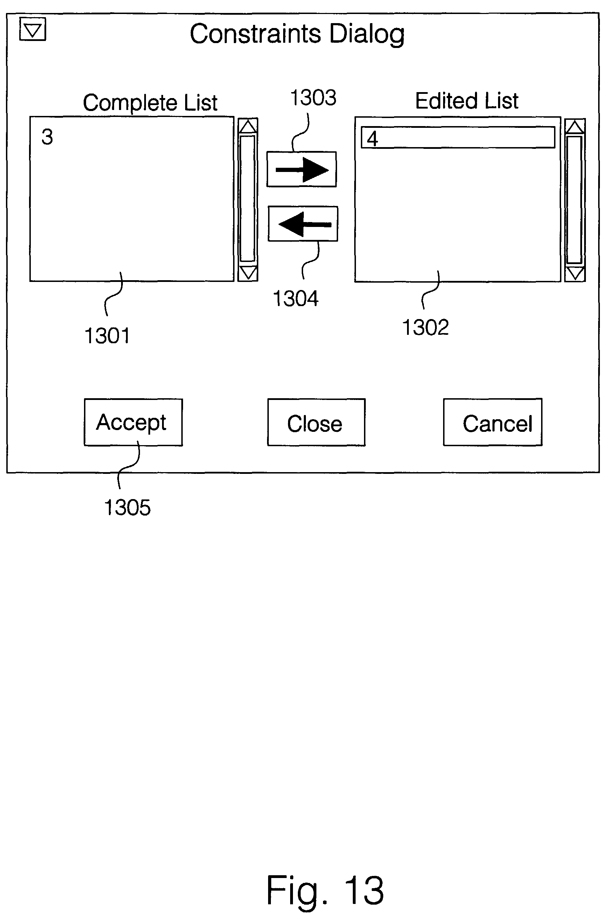

Browse menu 1011 may comprise three entries:
Network elements: causes the GND to display a dialogue box containing all network elements, which may allow the network operator to access properties of selected network elements, changing their operational state, creating sites and sub-nets, managing groups of network elements.
Links: causes the GND to display a dialogue box containing all physical, VC4 or VC12 links, allowing the network operator to access properties of selected links, changing their operational state.
Connection requests: causes the GND to display a connection selection dialogue box as described hereinbelow with reference to Fig. 13.

Output menu 1012 may comprise three entries:
Display: selects which view of the network is to be displayed in display region 1001.
Reports: allows the network operator to select from a list of available textual reports of the network and/or connection requests and implemented connections.
Fork view: fork a new view of the ACM.

The Display entry may allow the network operator to select from several possible views:
- display of physical links in the network
- display of VC4 links in the network
- display of VC12 links in the network
- display a utilization overview of the network, where links may be colored according to a percentage of timeslots used on each link
- display a utilization range view for the network wherein links are colored according to whether they are within a user defined range or not;
- display a route for a specific connection request at either VC4 or VC12

Reports selectable from the Reports entry may include:
- link dependents, ie links used in a server layer in order to define a link in a client layer, eg physical links used to support a VC4 layer link
- link utilization, ie either utilization of physical layer links or utilization of VC layer links
- connection definitions used/computed for all VC4 or VC12 connection requests

Preferences menu 1014 may comprise three entries:
Policy: may be used for selecting strategies used by the route finder and/or timeslot finder through the ACM, eg balance network traffic, shortest path.
Display: allows the network operator to select colors and coordinate mapping systems used by the GND.
Node: define user preferences for icons, for example network element icon 1004.

In addition to menus 1009 to 1013 a "pop-up" Background menu may also be selected by the network operator by clicking a middle button of the mouse. The Background menu may comprise 11 entries:
Add: allows the network operator to add new network elements, links, locations or connection requests.
Delete: delete existing network elements, links or locations.
Show: show selected network elements, links or their labels in display 1001.
Hide: hide selected network elements or links or their labels from display 1001.
Group: create new sites or sub-nets, delete, expand or collapse groups.
Print: print out a hard copy of the network displayed in display region 1001.
Refresh: Refresh graphical network display 1001.
Zoom out: zoom out one level, ie a predefined zoom factor.
Zoom to top: zoom out to top level of network display, ie display entire network in region 1001.
Select all: select all network elements and links within display region 1001.
Deselect all: deselect all network elements and links within display region 1001.

A network element menu may be displayed for selecting actions relating to that network element. This menu may comprise eleven entries:
Properties: generate a network element properties dialogue box.
Capabilities: display a capabilities editor (VC4 or VC12 layer.
Constraints: display a constraints editor dialogue (VC4 or VC12 layers)
Description: edit textual description of a network element.
Connection requests: display a dialogue box which may contain all connection requests relating to a particular network element.
Delete: allow a network element to be deleted from data describing the network.
Operational: toggle the operational state of a network element from operational to non-operational and vice-versa.
Front: move network element icon to front of display region 1001.
Back: move network element icon to back of display region 1001.
Collapse: collapse a network element icon to a group icon (if defined).
Select as: select a network element as either a source node or destination node for a connection request.

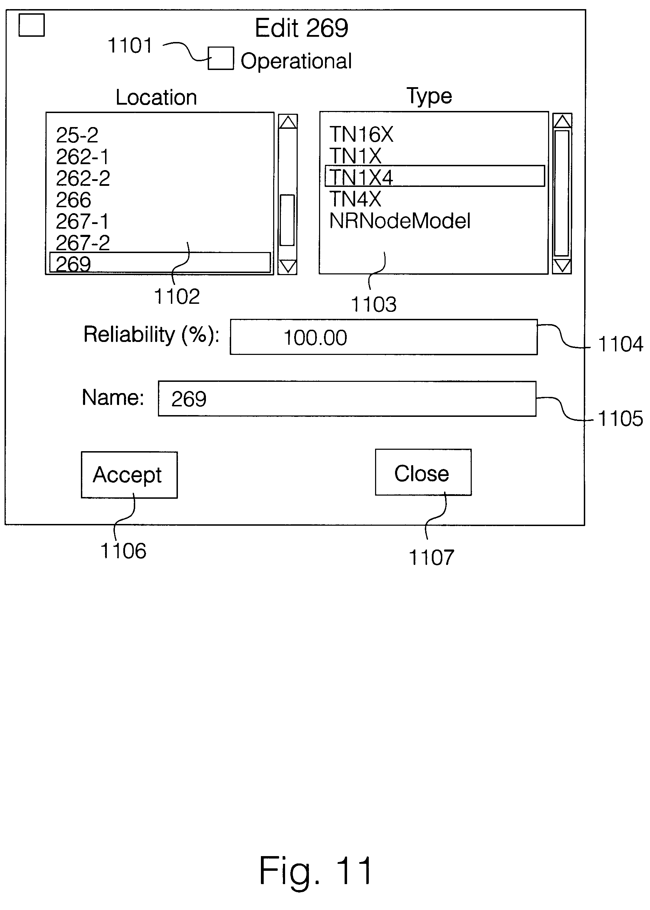

Fig. 11 of the accompanying drawings illustrates an example of the network element properties dialogue box. The dialogue box comprises a scroll box 1102 containing a list of names of network elements, with a selected network element's name being highlighted. The dialogue box also contains a type scroll box which may be used to select a type of the selected network element, for example TN16X, TN1X, TN1X4, TN4X. The dialogue box may also contain a reliability selection box 1104 used to enter a percentage value denoting reliability of selected network elements. The dialogue box may also comprise a name selection box may also comprise a name selection box 1105, used to edit the name of the selected network element. Data entered in the properties dialogue box for a selected network element may be accepted, ie the network data being edited according to the dialogue box, using accept box 1106. The properties editor dialogue box may be closed using close box 1107.

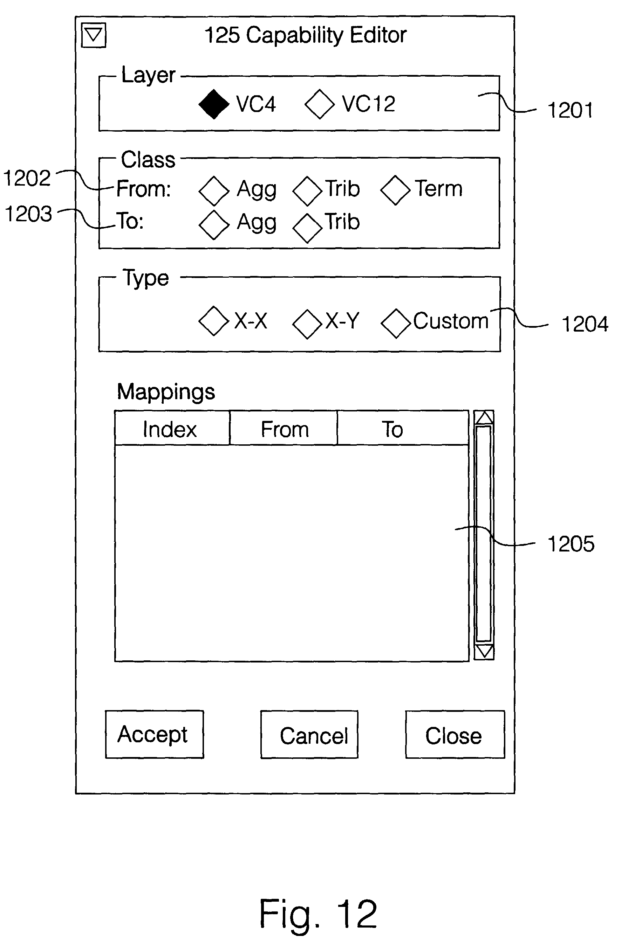

Fig. 12 of the accompanying drawings illustrates the capability editor dialogue box. The capability editor dialogue box may comprise a plurality of radio buttons 1201 used to enter capabilities associated with a selected network layer for a given layer, eg VC4, VC12. The dialogue box may also comprise a plurality of radio buttons to enter capabilities associated with a selected network element for a given class, eg radio buttons 1202 may select from class of the network elements from the set aggregate, tributary, terminal; radio buttons 1203 may be used to select two classifications from the set aggregate, tributary. Radio buttons 1204 may be used to select a type of the selected network element, for example X-X, X-Y, custom. Scroll box 1205 may be used to enter data describing mappings associated with a selected network element, the data including: index, from and to fields.

A Link menu may be displayed for selecting actions for editing data describing a selected link. The Link menu may comprise nine entries:
Properties: displays a property editor dialogue box for the link (or a connection request dialogue box if the link is part of a connection).
Dependents: generate a report showing which connections/connection definitions use a selected link.
Constraints: open a constraints dialogue for a selected link.
Description: allows the network operator to edit a textual description relating to a selected link.
Delete: allows the network operator to delete a selected link.
Operational: allows the operational state of the link to be toggled from "operational" to "non-operational" and vice-versa.
Front: moves a link line associated with the link to the front of display region 1001.
Back: moves a link line associated with the link to the back of display region 1001.
Collapse: collapse link line to a group icon (if defined).

Fig 13 of the accompanying drawings illustrates a constraints edit dialogue box. The dialogue box comprises a Complete list scroll box 1301; Unedited list scroll box 1302; a right arrow icon 1303; and a left arrow icon 1304. Additionally, for constraints editing relating to a network element the dialogue box may also comprise radio boxes selecting whether the selected network element is aggregate or tributary.

The network element constraints editor allows the network operator to select a sub-set of ports available for a given layer off-line in order to prevent them from being used in the connection management process by the ACM. In order to constrain ports from being used, identifiers for appropriate ports are selected from the complete list scroll box 1301 and right arrow icon 1303 is clicked using the mouse. The selected ports from the complete list scroll box may then appear in the edited list scroll box 1302. Clicking apply box 1305 with the mouse may edit the network data so that the ACM does not include the ports in its route and timeslot finding process. Unconstraining ports is achieved by selecting ports in the edited list 1302 and clicking the left arrow icon 1304 with a mouse button, followed by clicking the apply button 1305.

The link constraints editor dialogue as pictured in Fig. 13 is used to constrain timeslots. In order to constrain timeslots within a selected link from being considered by the ACM, the appropriate timeslots are selected in complete list scroll box 1301, the write arrow icon 1303 is selected and the selected timeslots appear in edited list scroll box 1302. In order to unconstrain the timeslots, appropriate timeslots are selected in edited list scroll box 1302 and left arrow icon 1304 is clicked.

A Group menu may allow manipulation of a group of network elements and/or links. The Group menu may comprise seven entries:
Edit: allow a label associated with a group to be changed.
Expand: expand an icon relating to a group, ie highlight network element and/or links in a group.
Delete: delete a group
Operational: toggle operational state of all network elements and/or links within a group from operational to non-operational and vice-versa.
Front: bring group icons to front of display area 1001.
Back: send group icons to back of display area 1001.
Collapse: collapse group icon to a containing group icon (if defined).

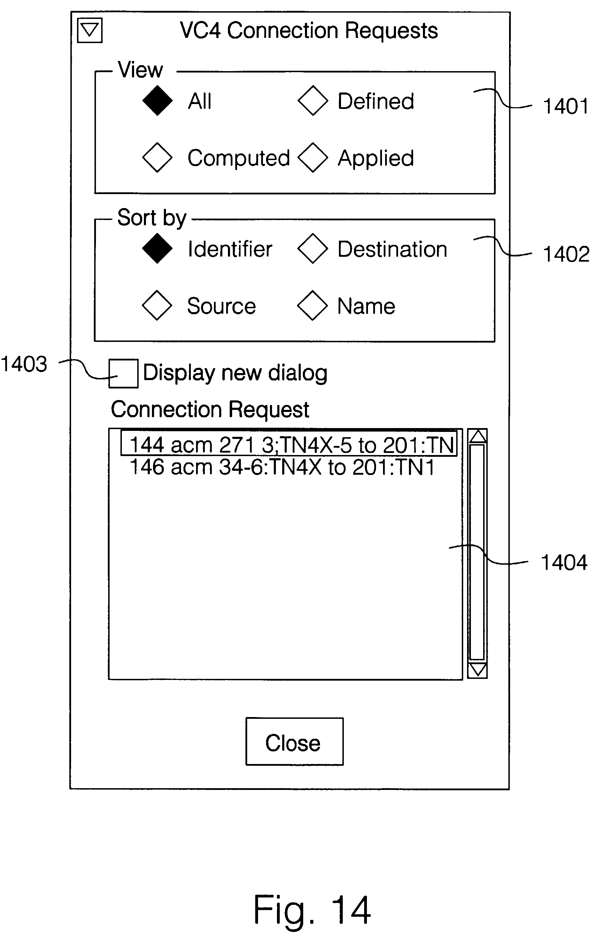

Fig. 14 of the accompanying drawings illustrates an example of the connection selection dialogue box. The connection selection dialogue box may be used to display connection requests in a given state, ordered accounting to numerical identifier, name, source or destination network elements. Connection selection dialogue boxes may be used to display connection requests associated with a specific network layer or a specific network element. The dialogue box may comprise three sections. "View" section 1401 may comprise four radio buttons. Selecting an "All" radio button may cause display of all connection requests. Selecting a "Computed" radio button may display only connection requests for which connections have been computed. Selecting a "Defined" radio button may display connection requests for which connections have not yet been computed. Selecting an "Applied" radio button may display connection requests which have been implemented in the network.

A "Sort by" section 1402 of the dialogue box may comprise four radio buttons. Selecting an "Identifier" radio button may cause a list of connection requests shown in a scroll box 1404 to be sorted according to numerical identifier. An example of a connection request contained within scroll box 1404 may be:
144 acm 2701_3:TN4X_5 to 201:TN1X

The numerical identifier may be a leftmost number (144) in the connection request display. Selecting a "Source" or "Destination" radio buttons may cause the connection request list contained within scroll box 1404 to be sorted according to source or destination network element names respectively. Selecting a "Name" radio button may cause the list to be sorted according to a name field of the connection request (second element of connection request description "acm" in the above example).

A third section of the dialogue box 1403 may consist of a check box and the scroll box 1404. The check box may be used to determine whether an existing dialogue box is to be used for displaying and editing of a connection request or whether a new connection selection dialogue box is to be opened. The scroll box 1404 may be a multi-select list on which various menu operations may be defined, including:
New: create a new connection request dialogue.
Edit: edit existing connection request.
Copy: create copies of selected connection requests.
Delete: delete selected connection requests.
Compute: compute connection definitions for selected connection requests.
Report: generate a report on selected connection requests.
Set focus: set focus network element of GND to connection request source/destination network elements, ie display the element in region 1001.
Select All: select all connection requests.
Deselect All: deselect all connection requests.

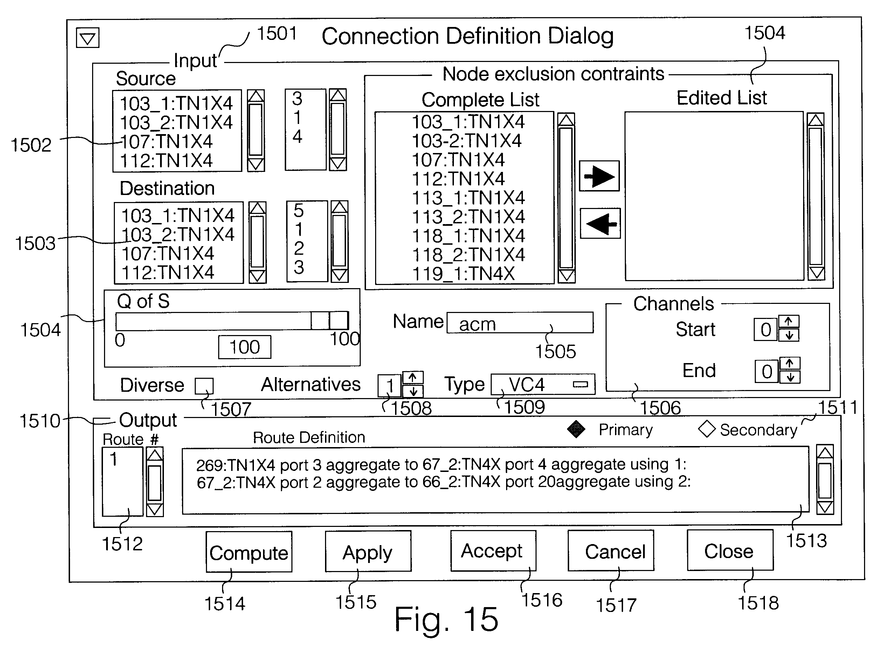

Fig. 15 of the accompanying drawings illustrates an example of a connection definition dialogue box. The connection definition dialogue box may be used to define and edit connection requests. The connection definition dialogue box may consist of an input region 1501 containing a number of fields described in the table hereinbelow:

| **Field** | **Type** | **Meaning** |
|---|---|---|
| Source 1502 | Scroll box list | Start point for a connection request. A node and a port may be selected. A menu associated with the source can be used to focus the GND's display region 1001 on a specific network element icon. |
| Destination 1503 | Scroll box list | End point for a connection request. A node and port may be selected. A menu associated with destination may be used to focus the GND's display area 1001 on a specific network element icon. |
| Nodal Constraints 1504 | Connected list Scroll boxes | Network element in right hand multi-select list, scroll box may be excluded from connection definitions computed by the ACM for the connection request. The Nodal constraint field may operate in a similar manner to the constraint style of box illustrated in Fig. 13. |
| QoS 1504 | Integer | Quality of service required for connection. |
| Name 1505 | String | User friendly string (eg a customer name) describing nature or function of the connection request. |
| Channels 1506 | Integer | Time slots to be used for adding and dropping connection, ie timeslot to be used at source and destination network elements of connection definition. Zero may be used in order to indicate that there is no user preference. |
| Diverse 1507 | Check box | When check box is checked a network element and link diverse route may be computed by the ACM for the connection request if possible. |
| Alternatives 1508 | Integer | Number of alternative routes to be computed by ACM for the connection request. |
| Type 1509 | VC12/VC4/VC3 | Type of connection to be created. |

The dialogue box may also comprise an output region 1510 consisting of a list of alternative routes 1510, a scroll box 1513 containing text used to display connections for a particular connection request and radio button 1511 used to select between primary and secondary connections for the connection request. Connection text in scroll box 1513 may have a menu associated with it containing entries as follows:
Copy: copy connection definition (may be used for exporting connection data to other applications).
Restore: restore definition of connection.
Accept: accept text as definition of a valid connection.
Recompute: may be used to select a portion of a connection definition and recompute an alternative definition.
Report: generate a report for a connection request.
Show route: show connection definition found for connection request in GND's display region 1001.

The connection definition dialogue box may also comprise a plurality of buttons located at the bottom of the dialogue box. Some of the buttons may only be enabled for selection when certain actions involving the dialogue box have been performed. The buttons may include: Compute 1514, Apply 1515, Accept 1516, Cancel 1517 and Close 1518.

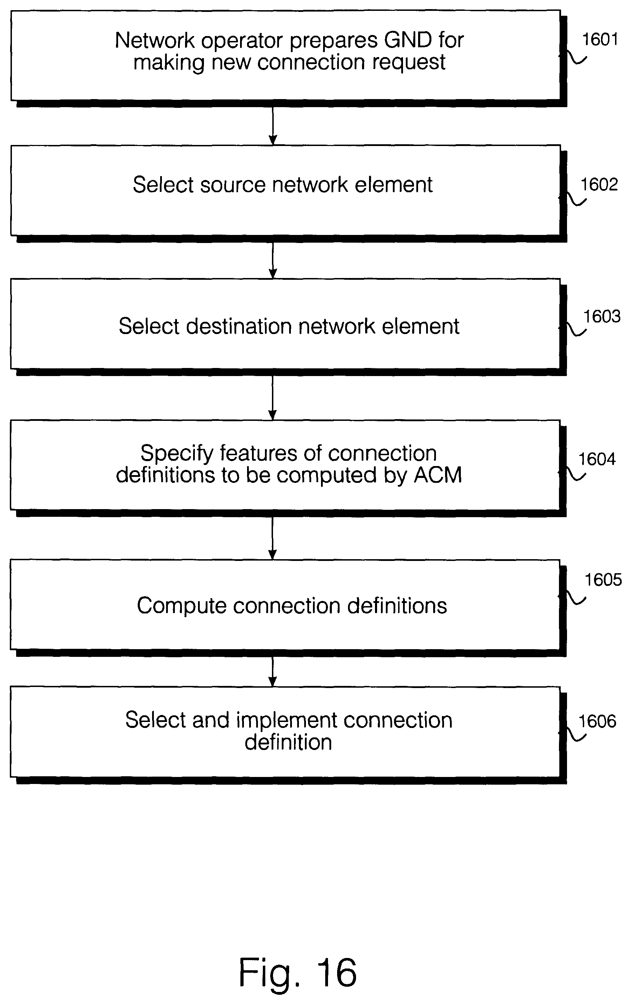

Fig. 16 of the accompanying drawings illustrates steps typically performed by a network operator to use the GND to create a connection request, instruct the ACM to compute connection definitions for the request and then implement a selected connection definition as a connection.

At step 1601 the network operator prepares the ACM's GND for making a new connection request. The network operator first clicks the middle button of the mouse to access the Background menu. The network operator selects Add entry from menu and Connection Request from sub-menu. A connection definition dialogue box is displayed.

At step 1602 the network operator selects the source network element of the connection request. The network operator moves the mouse pointer to a network element icon representing the source network elements and clicks the middle button. Data describing the selected source network element may be displayed in source field 1502 of the connection definitions dialogue box.

At step 1603 the network operator selects the destination network elements of the connection request. The network operator moves the mouse pointer to the network elements icon(s) representing destination network element(s) of the connection request and clicks the middle button of the mouse. Data describing selected destination network element(s) may be displayed in destination field 1503 of the connection definition dialogue box. The Accept button 1516 on the connection dialogue box may now be enabled.

At step 1604 the network operator may specify features of connection definitions to be computed by the ACM for the connection requests. For example, selecting number of alternative connection definitions to be computed by the ACM using field 1508 of the connection definition dialogue box, selecting network elements to be excluded from the connection definitions using field 1504, selecting timeslots to be used at source and destination network elements of the connection definition using field 1506; indicating whether a diverse secondary route is to be computed using field 1507 and indicating quality of service required for the connection using field 1504. When the features are acceptable to the network operator, the Accept button 1516 may be selected.

At step 1604 the network operator instructs the ACM to compute connection definitions for the connection requests by clicking Compute button 1514 of the connection dialogue box which may be enabled after Accept button has been selected. Once the Compute button is enabled, the network operator may select an order to instruct the ACM to compute connection definitions for the connection request. A message may be displayed within the GND indicating that connection definition computations are in progress. Buttons on the connection definition dialogue box may be disabled during computation of connection definitions.

At step 1606 the network operator may select and implement one of the set of possible connection definitions computed by the ACM for the connection requests. After the ACM has attempted to compute the connection definitions for the connection request a message may be displayed indicating whether the computation was successful or not. If at least one connection definition has been computed by the ACM, route numbers representing the connection definitions may be displayed in route scroll box 1512 of the connection definition dialogue box. Selecting one of these route numbers may display the connection definition in scroll box 1503 and the Apply button 1515 may be enabled. If the connection definition is acceptable to the network operator then the network operator may select the Apply button with the intent of instructing the ACM to implement the connection definition as a connection in the network.

Data describing the network and connection requests either entered into the ACM processor 801 by the network operator using the GND as described above or obtained by the ACM processor via the ACM interface from the MIB and network service applications at steps 901 and 902 of Fig. 9 is stored by the ACM processor as its network model. The format of the network model may be as described hereinbelow. The following syntax may be used to define a network element in the network model:
*[NODE] {name latitude longitude equipment_type}*
   wherein *name* preferably comprises a string of characters denoting a name of the network elements; *latitude* and *longitude* are preferably real numbers specifying geographical location of the network element; *equipment_type* preferably specifies a type of equipment comprising the network element (the type of equipment may include TN1X, TN1X4, TN4X and TN16X).
   Optionally, a network element described using syntax as described hereinabove may have optional port and capability data associated with it. Data used to define configuration of ports on a network element may be:
*[PORTS] {node layer {tributary {port_list}}}*
   wherein *node* is preferably a identifier used by the *NODE* data field; *layer* may detail a layer of transmission hierarchy in which the ports described by the data field are appropriate; *tributary* is preferably a type of the port; and *port_list* is preferably a list of port numbers available for the layer.
   Data describing network element equipment capabilities which may define how nodes are configured and their limitations may be described using the following data field:
*[CAPABILITY] {node layer {input} {output}}*
   wherein *node* defines a node; *layer* defines a transmission layer which the capabilities relate to; and *input* and *output* fields define capabilities for the network element on a port by port basis. The syntax of the *input* and *output* fields may be:
*{type {port_list}}*
   wherein *type* is preferably a character string identifying a type of connection; for *input* fields the type may be either *aggregate* or *tributary*, for *output* fields the type may be *aggregate* or *termination*; *port_list* is preferably a list of ports relating to the capability. For example a capability of:
*[CAPABILITY] {node vc4 {aggregate {2 3 4}}*
   *{aggregate {2 3 4}}}*
   may indicate that the node is configured so that ports 2, 3 and 4 on the VC4 layer can cross connect to ports 2, 3 and 4. A capability of:
*[CAPABILITY] {97_2 vc4 {aggregate {1}}*
   *{termination {1}}}*
   may indicate that any VC4 traffic coming into the network element on aggregate port 1 will terminate.
   The ACM may also store a number of different classes of objects containing data describing the network and/or connections and connection requests. The objects are preferably stored in ACM processor component 801 and may include:
*ACMmodel (Nodes, Links, Layers, Trails, LayerHierarchies, Policies, ConnectionRequests, Aggregates)*
   The *ACMmodel* class is used to store all physical equipment (transmission network elements and links) in the network along with a definition of all aggregate structures such as matched network elements and rings. The class may also contain definitions of all connections implemented in each of the layers defined in the transmission hierarchy, eg VC4. The objects stored by the *ACMmodel* class are collections of *Equipment, Link, Aggregate and Layer* instances present in the network being modeled. The instances are preferably identical to the classes having identical names described hereinbelow:
*Aggregate (Name)*
   The *Aggregate* object is an abstract class used to define aggregate structures in the network such as a ring. The object may have two sub-classes: *ring* and *matchedNodes.*
*Ring (Name, Protection, Links)*
   The *Ring* object defines a ring structure and its associated protection. The *Ring* object is a sub-class of the *Aggregate* class. The *Ring* object stores all links that are part of a ring within the network.
*MatchedNodes (Name, Node1, Node2, Ring)*
   The *MatchedNodes* object defines a pair of matched nodes within a ring and is a sub-class of the *Aggregate* class. The *MatchedNodes* object may be used during inter-ring computation in order to ensure that traffic is duplicated appropriately in order to provide enhanced protection for end to end connection definition. The *Node1* and *Node2* attributes are names of nodes within the ring indicated by the *Name* attribute. The *Ring* attribute contains a reference to the ring for which the nodes indicated in the *Node1* and *Node2* are considered matched.
*Identifier (Name, Id)*
   The *Identifier* class is used to provide a user-friendly name and a unique integer description for an object within the ACM. The *Identifier* object may be used by the connection request class in order to have a meaningful name associated with a connection request, eg name of a customer making the connection request. It is intended that the name be used across multiple connection request instances but that the *Id* be unique across all connection requests.
*Layer (Name, LayerDefinition)*
   The *Layer* class is used to capture a definition of the network at a given virtual layer, eg VC4. The name of the layer will for example be VC4 or STM. While STM and VC layers are physically different, they may be modelled conceptually using the same class. The *Layer* definition will consist of a set of trails, ie connectivity information for a named layer. In the preferred embodiment layers are defined for STM1, STM4, VC12, VC3 and VC4 layers but it will be appreciated that the invention will not be limited to these layers alone.
*Trail (ConnectionRequest, Channel, Route, Protected, Link)*
   The *Trail* class may be used to capture a definition of a connection for a given layer. The *ConnectionRequest* attribute may be a reference to the connection request for which the connection definition has been generated. The Route attribute may be an ordered list of links that are traversed by the connection definition. The *Channel* attribute may be an integer which indicates which timeslot is to be used at the source network elements. Note that the timeslot at the destination node may not be the same as it is possible to cross connect at intermediate network elements within the connection definition which have an appropriate capability. The *Protected* attribute stores a protection level for the connection definition. If empty, no protection is provided for the connection definition. If protection is specified, the identifier of a secondary connection definition computed for the connection request may be specified by the *Protected* attribute. The *Link* attribute refers to a link that has been created within the *ACMmodel* for this *Trail* object.
Equipment (Name, Capabilities, Ports)
   The *Equipment* class allows objects with capabilities to be defined. The *Equipment* class is an abstract class, with specific sub-classes created for each *Equipment* type modeled within the network, eg TN1X. The *Name* attribute stores a unique identifier for the node, eg "Node A". The *Capabilities* attribute may store abilities of the *Equipment* perform specific functions, eg adding a VC12, allowing VC4 traffic to pass through the equipment. The *Capabilities* attribute consists of a list of instances of *EquipmentCapability* class objects. *EquipmentCapabilities* may also be defined for each *Equipment* class, thereby allowing default capabilities to be associated with network element equipment of a particular type. The *Port* attributes may store ports that are available to be a piece of equipment, eg a transmission node having ports 4, 5 and 6 which support VC12 capabilities.
EquipmentCapability (*Node, Copied*)
   The *EquipmentCapability* is an abstract class and may be used to represent a capability for a given piece of transmission equipment. The *Node* attribute refers to an instance of a piece of transmission equipment. The *Copied* attribute, if having a value of *True*, means that the capability is a copy of a default capability.
*GenericEquipmentCapability (Node, Layer, End1, End2, ChannelConstraints)*
   The *GenericEquipmentCapability* class allows capabilities to be defined for pieces of equipment. The *Layer* attribute is a network layer for which the capability is defined, eg VC12. The *End1* and *End2* attributes are instances of *ConnectionCapabilityEndPoint*s (effectively a type of force that can be connected, eg tributary to tributary. The *ChannelConstraints* attribute stores information on channels which are available, eg 1 - 12. Two sub-classes may be defined: *OneToOneConnectionCapability* and *ManyToManyConnectionCapability*. The ACM may know about equipment capabilities and not physical cards and ports and mapping of these two capabilities.
*ConnectionCapabilityEndPoints (Stream, Copied)*
   The *ConnectionCapabilityEndPoint* class is an abstract class that may be used to define an end point used in a description of equipment capability. Three sub-classes may be defined. The *Stream* attribute may be a collection of timeslots over which sequencing operations may be performed when searching for a timeslot that can be used to satisfy a connection request. The *Copied* attribute, if having a value of *True* indicates that the object has been copied from a default capability attribute.
*AggregateConnectionCapabilityEndPoint*
   Sub-class of *ConnectionCapabilityEndPoint*, representing an end point connected to an abstract aggregate port.
*TributaryConnectionCapabilityEndPoint*
   Sub-class of *ConnectionCapabilityEndPoint*, representing an end point connected to an abstract tributary point.
*TerminationConnectionCapabilityEndPoint*
   Sub-class of *ConnectionCapabilityEndPoint*, representing an end point connected to an abstract termination point.
*BindingStream (Value, Binding, Constraint)*
   The *BindingStream* class represents a "logical" variable similar in concept to those provided by the known prologue programming language. The Value attribute may store result of a "next" message being sent to an instance. The *Binding* attribute may store an object to which this "logical variable" is bound. The *Constraint* attribute may be an ordered connection of timeslots which cannot be used in connection definitions. The *BindingStream* class may be used by the timeslot finder when searching for timeslots to use on links in a route of network elements and links found by the route finder.
*Binding (Binding)*
   The *Binding* class represents a binding for a variable. The *Binding* attribute references an object to which it is bound. The *Binding* instance returns a value of an object to which it is bound if asked for its value (read timeslot) or the bound object if currently unbound. The *Binding* class, may be used by the timeslot finder.
*LayerHierarchy (Layer1, Layer2, Multiplex)*
   The *LayerHierarchy* class may be used to capture dependencies between network layers. The *Layer1* attrubute may be a name of a network layer which contains the attribute *Layer2* for example, values VC1 for *Layer1* and VC12 for *Layer2* would be a value combination of values for a *LayerHierarchy* object. The *Multiplex* attribute may store a number of timeslots in Layer2 which may be routed to *Layer1*.
*Policy (Variable, Value)*
   The *Policy* class allows for user preferences to influence computation of connection definitions. The *Variable* attribute may store name of a policy variable, eg ringSPRINGrouting. The *Value* attribute may store a value of a *Policy* variable, eg "use lowest available time slot first" = 1.
*ClientServerAdapter (Client, Server, Adapter, Trail)*
   The *ClientServerAdapter* class may store relationships between the links into layers. The *Server* attribute may be a *Link* object providing a service (resource) to a set of client links. The *Client* attributes may be a collection of *Link* objects receiving service from the server layer. The *Adapter* object may define how resources in the server link are made available to the client links. The *Trail* attribute refers to the *Trail* object that created the server link originally.
*AdapterClientServer (Resource, Constraint, Capacity)*
   The *Adapter* class determines how service is to be provided from a server layer object (link) to a client layer object (link). The *ClientServer* attribute is a *ClientServerAdapter*, an object that associates multiple client links with a single server link in a higher layer. The *Resource* object is an ordered collection of timeslots that may be provided to client layers. The *Constraints* attribute may be an ordered collection of timeslots which have been made unavailable to client links. The *Capacity* attribute may be an integer representing a seize of resource collection when unconstrained.
*Link (StartNode, EndNode, AggregateName, Protection, Capacity)*
   The *Link* class object may store information related to physical transmission links. The *StartNode* and *EndNode* may be names of nodes at beginning and end of the link. The *AggregateName* attribute stores a name of the aggregate (if any to which the link may belong. Typically, this may be the name of a ring in the network. The *Protection* attribute may store information indicating whether the link is protected or not. The *Capacity* attribute may store an amount of bandwidth available on the link, eg STM1, representing a "cost" of the link.
*ConnectionRequest (Identifier, StartNode, EndNode, LayerName, Protection, Constraint, Alternative)*
   The *ConnectionRequest* object may store information related to a connection request. The *Identifier* attribute may allow for unique identification of a specific connection request. The *StartNode* attribute and *EndNode* attributes may be names of source and destination nodes of the request respectively. The *LayerName* attribute may be one of the layers in the SDH hierarchy, eg VC12. The *Protection* attribute specifies whether protection on the connection request's connection definition is required. The *ConstraintAttribute* may store a list of included and excluded network elements/links to be used in computation of a connection definition for the connection request. The *Alternative* attribute specifies a number of alternative connection definitions that should be returned.
*TransmissionPath (Hops)*
   The *TransmissionPath* class may define a route used in the network. The *Hops* attributes stores an ordered sequence of hops used to move from a source network element to a destination network element.
*TransmissionHop (StartPt, EndPt, Channel)*
   The *TransmissionHop* class may define a single hop used in a transmission path. The *StartPt* variable stores the start network element and port used for the hop. The *EndPt* attribute stores the destination node and port used for the hop. The *Channel* attribute indicates the timeslot used on the link used.

After the ACM processor has created data representing its network model and received connection requests, the data is received by the route finder manager 804 at step 903 which transforms it to a format acceptable by the route finder 709. The output of the route finder manager is preferably in a format of a simple ASCII protocol (SAP) file, details of which can be found in the applicant's patent application referred to hereinabove. The route finder manager may be considered to comprise of three components: pre-processor, post-processor and timeslot finder manager interface. The pre-processor component takes the network model stored in the ACM processor and extracts information pertinent to processing connection requests. The pre-processor preferably generates a file which may be stored on a storage device that is used as an input to the route finder. The post-processor component takes SAP-formatted output from the route finder and extracts route information that is associated with particular connection requests. The extracted information is passed on to the timeslot finder manager interface in order that timeslots may be assigned for individual routes.

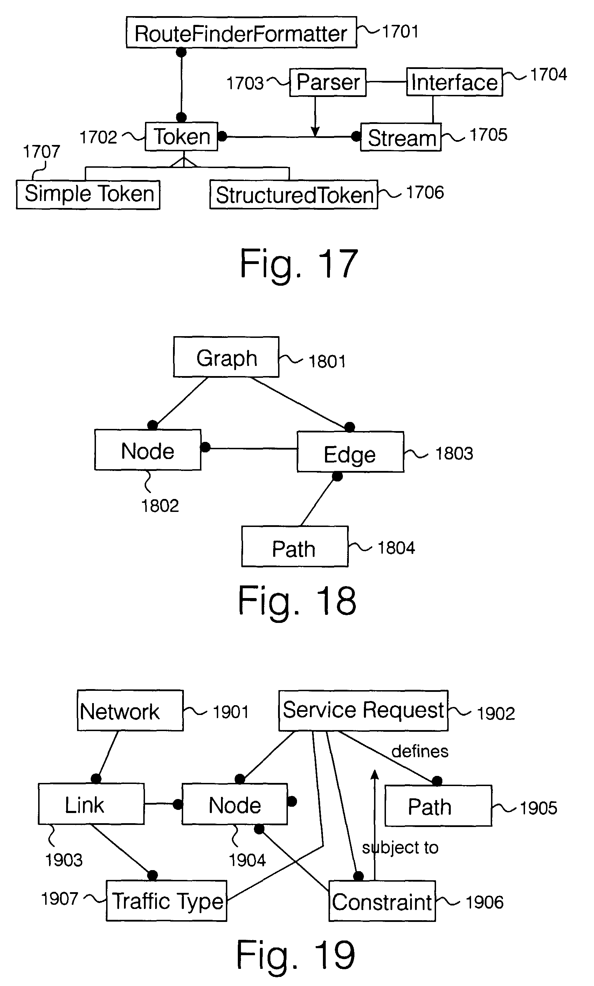

Fig. 17 of the accompanying drawings illustrates a class association diagram for data used by the route finder manager. A *RouteFinderFormatter* class 1701 is associated with *Token* class 1702. *SimpleToken* 1707 and *StructureToken* 1706 inherit characteristics from the *Token* class. The *Token* class is associated with *Stream* 1705. *Stream* is associated with *Interface* 1604. *Interface* is associated with *Parser* 1703.

The route finder used by the ACM is preferably substantially similar to the one described in the patent specification referenced hereinabove, although the route finder may contain modifications in order to facilitate use by the ACM. As the route finder is preferably a generic route finding engine, network definitions of all layers may be used by the route finder, however the route finder may not be aware of multiple layers and searches for routes on one particular layer at a time. In a hierarchical network such as SDH, as the route finder is unaware of multiple layers, it may not optimize resource allocation of any layers below the one it is currently searching for routes on, for example when searching for a route for a VC12 connection request as a connection found for the VC12 connection request may use VC4 links any VC4 links will be included as links in the route finder's model of the network of links for the connection request.

The route finder may be considered as comprising of two modules: a path generation module and an optimizer module. The path generation module is intended to generate shortest paths for connection requests on data describing a network graph passed to the module by the route finder manager. The path generation module may perform network reduction, ie eliminating links whose capacity are less than that required by a connection request. The network operator may specify that a secondary connection definition is required. The secondary connection definition may be of one of the following forms:

Nodal diverse path: if a diverse path pair exists, then no network element or links will be used in both paths. A nodal diverse path may not be a shortest circuit calculation but a shortest path based algorithm modified to avoid potential "hot spots" in diverse routes.

Link diverse path: this diversity measure is intended to ensure that no links are used in both paths. Network elements can be reused as long as a different link is used when leaving that network element.

Node compliment path: this diversity measure uses a simplistic calculation whereby a compliment to an original path is generated by removing a network elements in the graph used by the first path. This calculation makes no attempt to change the original path if no secondary path can be found.

Link compliment path: a compliment to an original path is generated by removing all links in the graph used by the first path.

The nodal and link diverse paths may only be guaranteed for one path pair if more than one path is requested. Otherwise remaining paths will default to reuse compliments to remaining K-1^{th} shortest paths. Although this may rarely yield K shortest diverse paths, it is a reasonable approximation. Further, it better represents nature of route diversity required in telecommunications networks, in that a primary route should be the shortest route available, while a secondary route is usually only used in the case of equipment failure. An additional tag my be necessary to find the type of diversity measure required by the ACM in the route finder's input file. The additional tag may appear in the *[traffic]* section of the route finder's input SAP file and the tag can be one of:
*NodeDiversity*
*NodeComplimentRoute*
*LinkComplimentRoutes*
*DiverseRoutePair*
*LinkDiverseRoutePair*

A default diversity measure for ACM may be *DiverseRoutePair*. An example connection request may be:
*27 n5 n1 3 Data DiverseRoutePair {8 #}*
   The output from the route finder will be substantially identical to that described in the patent application referenced hereinabove. Possibly the output file may include change if a secondary connection definition has been requested for a connection request. Thus, for each secondary connection definition requested in a connection request, a pair of routes will be returned. If a diverse route cannot be found by the route finder an empty structure may be returned.

Fig. 18 of the accompanying drawings illustrates a class association diagram for the path generation module. The diagram comprises a *graph* class 1801 which has a *node* class 1802 and an *edge* class 1803. The *edge* class has node 1802. The diagram also includes a *path* class 1804 which has edge 1803.

The classes of the path generation module specifically relate to providing paths in an abstract graph.:
*graph (nodes, edges)*
   A *graph* object is an abstracted view of the network. There will be a *graph* object for each traffic type in the network.
*node*
   A *node* object may be an end point in the abstract graph, representing a network element in the network.
*edge (cost)*
   An *edge* object may represent a transmission link in the network. An *edge* object preferably has a single cost. The cost is generic and may be defined by the cost of the relevant links of the associated traffic type or it could be defined using a measure of link utilization.
*path (startnode, endnode edges)*
   A *path* object comprises a collection of *edge* objects between a start node (representing a source network element of a connection request) and an end node (representing a destination network element of a connection request).

The optimizer module of the route finder may be intended to "balance" utilization of network resources when a set of connection requests are made. This balancing may be achieved by selecting routes used for each connection request from a set of routes returned from the path generation module. Fig. 19 of the accompanying drawings illustrates a class association diagram for the optimizer module. The following list provides object details and relationships between the various classes:
*network (nodes, links)*
   The *network* class 1901 stores information describing the network. The information may include a definition of associated network objects such as the network elements and links.
*Service Request (identifier, StartNode, EndNode, Constraint, TrafficType, Quantity, Diversity, NumPaths, Paths)*
   The *Service Request* class 1902 stores information describing a service request, including a unique identifier for the connection request, the source network element, the destination network element, constraints on the routes to be found for the connection request, the traffic type of the connection request, the quantity of traffic to send (preferably represented by a unit equivalent to the "cost" associated with an edge object); whether a pair of diverse paths (primary and secondary) should be generated; a number of paths requested for the connection request and a set of routes generated by the path generation module.
*link (StartNode, EndNode, Capacity, TrafficTypes)*
   A *link* object stored details about network links. The object stores data describing network elements at either end of the link; capacity of that link and attributes for each traffic type.
*node (name, capacity)*
   A node object may be a lowest element in the network that is contained within the optimizer module. The object comprises a name and a capacity of the network element represented by the *node* object.
*traffic type (name, cost)*
   A *traffic type* object is preferably an abstract type used within the route finder to assign multiple attributes to links. Thus, each link may be assigned different costs depending on a desired quality of service for each connection request.
*constraint*
   A *constraint* object 1906 restricts the routes found for a connection request by enforcing the path generation module to adhere to particular limitations. The constraints may include: including/excluding links; including/excluding network elements; using shortest path; using user defined path.
*path (StartNode, EndNode, LinksUsed)*
   A *path* object 1905 stores a route through the network between the source network element and the destination network element of a connection request. The *LinksUsed* attribute stores a set of one or more links between the source and destination network elements.

The timeslot finder manager component of the ACM receives the routing solutions generated by the route finder from the route finder manager at step 904 of Fig. 9 and, at step 905, the timeslot finder manager interacts with the timeslot finder. The timeslot finder manager receives information from the ACM processor, including information about the network; topology and equipment characteristics as well as connection requests and also receives data from the route finder manager, including the routing solutions comprising a list of possible routes to use for the connection requests. The timeslot finder manager may comprise several interfaces, including a connection information interface, a timeslot finder pre-processor interface, a path generation interface and an operator interface.

The connection information interface may contain the following information, preferably represented as Prolog facts. The connection information interface is responsible for correct formatting (syntax) of this information, as the timeslot finder may not perform any checking of the information. Examples of the information may include:
- definition of rings within the network
   *ring (ring 1, dpring)*
- definitions of matched nodes within the network
   *matchedNodes (mn1, node 1, node 2, ring 1)*
- definitions of links within the network
   *link (node 1, node 2, ring 1, nil, stm 1)*
- definitions of network element equipment
   *equipment (node 1 [capability (add, vc12, 1-63), capability (drop vc12, 1-63)]*
- definitions of connections already implemented in the network
   *trail (id (1, node 1, node 2, vc12, 1 [node 1, node 2] nil)*
- definitions of conjoined implemented connections
   *container (id (1), id (2), 1)*
- definitions of connection requests
   *connectionRequest (id (1), node 1, node 2 vc12, protected, [])*

The timeslot finder pre-processor interface may contain the following information, preferably represented as Prolog facts. The timeslot finder pre-processor interface may be responsible for correct formatting (syntax) of this information.
- definitions of routes selected from the set of possible routes found by the route finder
   *selectedRoute (node 1, node 2, id (1))*

The path generation interface may contain the following information, preferably represented as Prolog facts.
- definitions of paths:
   *path (id (1), node 1, node 3 [node 1, node 2, node 3])*

The operator interface may be used to communicate results of computing connection definitions including timeslots found by the timeslot finder to the network operator, possibly using the GND or to the service applications which made the requests The format of the information used by the operator interface may be as follows:
*{id start_node end_node type route protection}*
   wherein *id* may comprise an identifier identical to the connection request for which the connection definition has been found. *id* may be of the form *primary (number, alternative)* or secondary *(number, alternative)* depending on whether the connection definition is a primary connection definition or a secondary (protection) connection definition;
*start_node* and *end_node* may comprise names of source network elements and destination network elements of the connection request respectively;
*type* may comprise a type of the connection request, eg VC12;
*protection* may comprise a string indicating whether the connection defintition represents a *protected, part_protected, diverse* or *none*;
*route* may comprise a series of four-tuples of the following form:
   *{{start_node action channel tandem_node} ...{end_node action channel tandem_node}}*
   wherein each tuple preferably comprises a network element name, an action (being either *add, drop, through* or *cross_connect*) and a timeslot number (*channel*). The timeslot number represents an egress timeslot used. If the *action* comprises *cross_connect* this indicates that the network element equipment provides a cross connection capability in order that its ingress and egress timeslots are different. If *action* comprises *drop*, then *tandem_node* may either be same as a first network element in the four-tuple, ie it is a sink network element, or a network element on another ring. Multiple definitions of a connection definition may be supported.

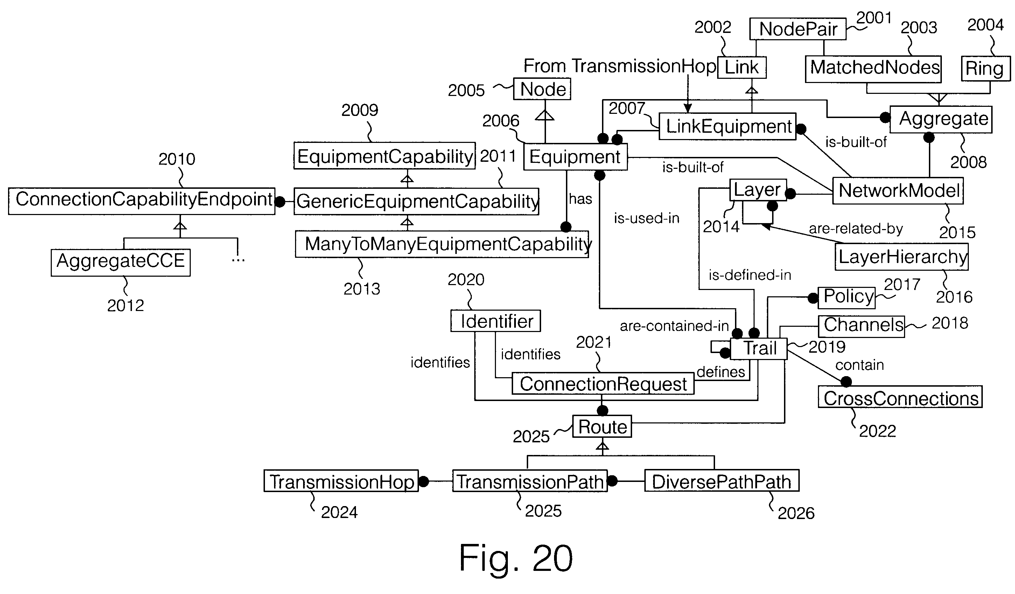

Fig. 20 of the accompanying diagrams illustrates a class association diagram for the timeslot finder. The objects of classes indicated in the diagram preferably comprise ACM system objects having similar names stored by the ACM processor as described hereinabove.

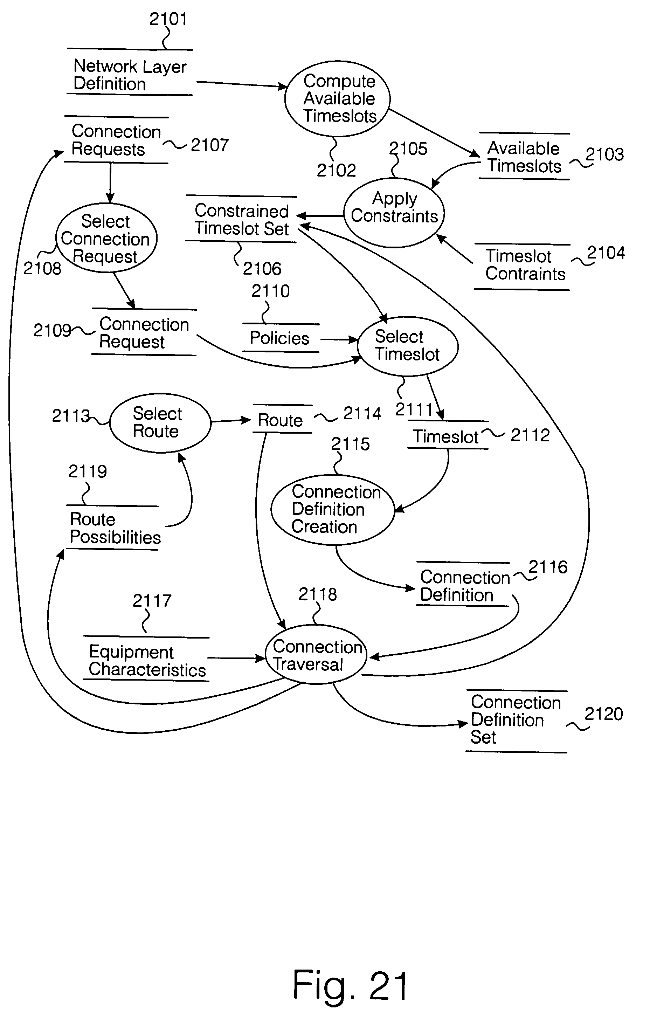

Fig. 21 of the accompanying drawings illustrates a dataflow diagram for the timeslot finder component 710 which is used by the ACM 708 at step 905 of Fig. 9 in order to attempt to find timeslots for implementing connection requests for which routing solutions have been found by the route finder component 709. Diagram elements in Fig. 21 appearing between parallel lines represent data and diagram elements appearing in oval borders represent processes. Directional arrows indicate flow of the data between the processes.

Network layered definition data 2101, possibly sent to the timeslot finder by the timeslot finder manager, is received by a compute available timeslots process 2102. The compute available timeslots process takes the definition of the network for a particular layer and computes which timeslots are available for each of the network elements in the network layer. The compute available channels process is preferably computed once for the whole network (all layers), and thereafter updates may be applied to it as new connections are implemented or old ones destroyed. The ACM may "listen" for connection creation/deletion events, along with other network changes such as addition of network elements or connections, component failure in order to update the network definition data. The compute available channels process outputs data representing available timeslots 2103 for the layer. Data representing timeslot constraints 2104, ie user specified constraints such as network elements to be excluded or included in connection definitions to be computed for a particular connection request, as well as the available timeslot data 2103 are received by an apply constraints process 2105. The apply constraints process takes into account the available timeslots and the constraints in order to compute a constrained timeslot set 2106.

Connection requests data 2107 may be entered into the timeslot finder from timeslot finder manager and used by a select connection request process 2108 in order to select a particular connection request 2109 for which the timeslot finder will attempt to find a timeslot. Data representing (user defined or default) policies 2110 may be used by the timeslot finder in order to determine which available timeslot to select if one or more alternatives are available, an example of a policy may be use a timeslot having a lowest numerical identifier. The constrained timeslot set data 2106, policy data 2110 and connection request data 2109 are entered into a select timeslot process 2111. The select timeslot process is intended to select one timeslot based upon the constrained timeslot available set and the policies in force for the selected connection request. The timeslot found may be used to start a connection definition for the connection request, however, cross connection capabilities may allow the timeslots to vary throughout the connection. Also, in moving from one ring to another, the timeslot may also vary.

The selected connection request 2109 is also entered into a select route process 2113. The select route process selects a single route of network links and elements from the set of routes found via the route finder and outputs data 2114 representing the selected route. A connection definition creation process 2115 receives the selected timeslot 2112 and the selected route 2114 and attempts to generate a connection definition for the selected connection request using the selected timeslot on the selected route. Data 2116 representing the computed connection definition may be entered into a connection traversal process 2118. Data 2117 representing network equipment characteristics may also be entered into the connection traversal process. The equipment characteristics data 2117 may be entered into the timeslot finder from the timeslot finder manager. The connection traversal process simulates a network connection across the network elements and links using the selected timeslots defined by connection definition data 2116 and checks whether the connection would be feasible, ie the complete connection can be traversed. If the connection is feasible then the connection definition may be added to connection definition solutions data 2120, representing a set of possible connection definitions which will be sent to the timeslot finder manager at step 905.

If the connection is not found to be feasible by the connection traversal process then a number of processing possibilities may exist. A first alternative may be to attempt to traverse the connection using a different timeslot, possibly selected from constrained timeslot set 2106. A second alternative may be to select a different route from amongst those provided by the route finder, data representing the route found 2119 may be entered into the select route process 2113 in order that a connection definition for the alternative route may be computed by connection definition creation process 2118. A third alternative may be to attempt to cross connect at nodes which support cross connection in order to generate a feasible connection definition. The alternative processing possibilities may be selected in order of preference by the network operator. If a feasible connection definition was found for the selected connection request then another connection request from the connection requests data 2107 may be selected in order to repeat a search for a feasible connection definition.

In short, connection feasibility is determined by a generate connection definition and test search process. A secondary connection definition may be computed at the same time as a primary connection definition if a connection request includes a request for a secondary connection definition.

## Claims

1. In a communications network comprising a plurality of nodes and links (101,101), each said link comprising at least one timeslot (198,218), apparatus characterized by being capable of computing one or more connection definitions for a connection request between a source node and at least one destination node, said connection definition comprising data describing a route of said nodes and said links and timeslots to be used for links of said route, said apparatus comprising:
a route finder means (709) for generating one or more said routes between said source node and said destination node;
a timeslot finder means (710) for finding timeslots for use by said connection request on each link of said generated route; and
a connections manager means (708) for interfacing between said route finder means and said timeslot finder means to compute a said connection definition.

2. Apparatus as claimed in claim 1, wherein said connections manager means (708) converts an output of said route finder means into an input for said timeslot finder means.

3. Apparatus as claimed in claim 1 or 2, wherein said connections manager means (708) allows selection from a set of said computed connection definitions.

4. Apparatus as claimed in claim 1,2 or 3, wherein said connections manager means (708) allows selection of said nodes to be excluded from said computed connection definitions.

5. Apparatus as claimed in anyone of claims 1 to 4, wherein said connections manager means facilitates generation of a secondary connection definition for a selected said connection request.

6. Apparatus as claimed in claim 5, wherein said connections manager means allows said secondary connection definition to include said nodes or said links not included in a said computed connection definition.

7. Apparatus as claimed in anyone of claims 1 to 6, wherein said network comprises a plurality of layers, said connection requests specifying at least one of said layers.

8. Apparatus as claimed in any one of claims 1 to 7, wherein said nodes comprise one or more ports and said connections manager means allows connection definitions to be computed which includes or excludes specific said ports.

9. Apparatus as claimed in anyone of claims 1 to 8, wherein said connections manager means comprises a graphical user interface, including a graphical network display.

10. Apparatus as claimed in anyone of claims 1 to 9, wherein said connections manager means is configured to receive said connection requests from service applications.

11. Apparatus as claimed in anyone of claims 1 to 10, wherein said connections manager means allows specific policies for use by said route finder means or said timeslot finder means to be selected.

12. In a communications network comprising a plurality of nodes and links, each said link comprising at least one timeslot (20,32), a method characterized by being capable of computing one or more connection definitions for a connection request between a source node and at least one destination node, said connection definition comprising data describing a route of said nodes and said links and data describing a timeslot to be used for links of said route, said method comprising the steps of:
generating one or more said routes between said source node and said destination node; and
finding a said timeslot for said connection request for links in a said generated route to compute a said connection definition.

13. The method as claimed in claim 12, comprising the step of selecting one of said computed connection definitions for implementation in said network.

14. The method as claimed in claim 12 or 13, comprising the step of selecting a set of said nodes to be excluded from said computed connection definitions.

15. The method as claimed in claim 12, 13 or 14 comprising the step of generating a secondary connection definition for a selected said connection request.

16. The method as claimed in claim 15, wherein said secondary connection definition includes said nodes or said links not included in a said computed connection definition.

17. The method as claimed in anyone of claims 12 to 16, wherein said network comprises a plurality of layers, said connection request specifying at least one of said layers.

18. The method as claimed in any one of claims 12 to 17, wherein said nodes comprise one or more ports and comprising the step of selecting said ports to be included or excluded from said computed connection definitions.

19. A telecommunications network including a network controller configured to operate a method as claimed in any one of claims 12 to 18..

20. In a communications network comprising a plurality of nodes and links, each said link comprising at least one timeslot, apparatus characterized by being capable of computing one or more connection definitions for a connection request between a source node and at least one destination node, said connection definition comprising data describing a route of said nodes and said links and timeslots to be used for links of said route, said apparatus comprising:
means for graphically displaying said communications network;
a processor (702) for computing said connection definitions;
means for communicating (704) with said network nodes; and
at least one data conversion manager (804, 805) means for communicating with at least one network application.

21. In a communications network comprising a plurality of nodes and links, each said link comprising at least one timeslot, a method characterized by being capable of computing one or more connection definitions for a connection request between a source node and at least one destination node, said connection definition comprising data describing a route of said nodes and said links and a timeslot (16, 18, 20, 32, 34) to be used for links of said route, said method comprising the steps of:
selecting said source node for said connection request;
selecting a said destination node for said connection request;
computing at least one said connection definition for said connection request; and
selecting a said computed connection definition.

22. The method as claimed in claim 21, comprising the step of applying constraints to said connection definition to be computed for a said connection request, said constraints selected from the set:
minimum quality of service;
nodes to be included or excluded from said connection definition;
compute a secondary connection definition for said connection request;
select ports to be used on specific said nodes in said connection definition; and
use said nodes on a specific layer of said communications network in said connection definition.

23. In a communications network comprising a plurality of nodes and links, each said link comprising at least one timeslot (16, 18, 20, 32, 34) a method characterized by being capable of computing one or more connection definitions for a connection request between a source node and at least one destination node, said connection definition comprising data describing a route of said nodes and said links and a timeslot to be used for links of said route, said method comprising the steps of:
selecting said source node for said connection request;
selecting said destination node(s) for said connection request;
receiving data describing at least one route for said connection request in a generic network; and
using data describing said route in a generic network to compute a connection definition for said connection request in a specific type of network.

24. The method as claimed in claim 23, wherein said specific type of network comprises an SDH network.
